(19) **Europäisches Patentamt**

**European Patent Office**

**Office européen des brevets**

(11) **EP 1 093 846 A1**

(12) **EUROPEAN PATENT APPLICATION**
published in accordance with Art. 158(3) EPC

(43) Date of publication:
**25.04.2001 Bulletin 2001/17**

(21) Application number: **00915454.3**

(22) Date of filing: **10.04.2000**

(51) Int. Cl.$^7$: **B01J 19/08**, B01D 53/70

(86) International application number:
**PCT/JP00/02317**

(87) International publication number:
**WO 00/61283 (19.10.2000 Gazette 2000/42)**

(84) Designated Contracting States:
**AT BE CH CY DE DK ES FI FR GB GR IE IT LI LU MC NL PT SE**

(30) Priority: **09.04.1999 JP 10334699**
**09.04.1999 JP 10334799**
**28.04.1999 JP 12316199**
**17.05.1999 JP 13635499**

(71) Applicant:
**Mitsubishi Heavy Industries, Ltd.**
**Tokyo 100-8315 (JP)**

(72) Inventors:
• **BESSHO, Masahiro,**
**Mitsubishi Heavy Ind., Ltd.**
**Nakamura-ku, Nagoya-shi, Aichi 453-8515 (JP)**
• **HATTORI, Toshio,**
**Mitsubishi Heavy Industries, Ltd.**
**Nakamura-ku, Nagoya-shi, Aichi 453-8515 (JP)**
• **TSUBAKI, Yasuhiro,**
**Mitsubishi Heavy Ind., Ltd.**
**Nakamura-ku, Nagoya-shi, Aichi 453-8515 (JP)**

(74) Representative:
**Brykman, Georges et al**
**c/o BREVATOME**
**3, rue du Docteur Lancereaux**
**75008 Paris (FR)**

(54) **DEVICE FOR DECOMPOSING ORGANIC HALOGEN COMPOUND AND FLUID HEATING DEVICE**

(57) In a decomposition apparatus which generates thermal plasma by the irradiation of microwaves onto a gas containing organic halogen compounds and decomposes the organic halogen compounds in the thermal plasma, a mist separator for separating and removing oil elements mixed with the organic halogen compounds is provided downstream from the cylinder that contains the organic halogen compounds, thereby preventing contamination of the piping system and the generation of byproducts. The cylinder is immersed in warm water in a temperature adjustment tank and the discharge pressure is kept constant by keeping the temperature of the saturated vapor in the cylinder constant. As a result, variations in the volume flow rate of the organic halogen compound are suppressed and the plasma is continuously stabilized for long periods of time.

FIG. 1

**EP 1 093 846 A1**

## Description

BACKGROUND OF THE INVENTION

Field of the Invention

The present invention relates to a decomposition apparatus for organic halogen compounds that uses plasma, and particularly, to a decomposition apparatus for organic halogen compounds that generates plasma using microwaves.

Moreover, the present invention relates to a decomposition device for organic halogen compounds and to a fluid heating apparatus for heating fluids such as water used in the decomposition device for organic halogen compounds.

Description of the Related Art

Organic halogen compounds containing fluorine, chlorine, bromine, and the like in the molecule such as fleon, trichloromethane, halon, and the like are extensively used in large amounts in a wide range of applications such as refrigerants, solvents, fire extinguishing agents, and the like, and are extremely important to industry.

However, these compounds are extremely volatile and if they are released untreated into the environment such as into the air, the ground or into water, they may have deleterious effects on the environment such as the destruction of the ozone layer, the generating of cancer causing substances, and the like. Therefore, from the viewpoint of preservation of the environment, it is necessary to perform treatment to render such compounds harmless.

The main reported conventional methods for treating organic halogen compounds employ a decomposition reaction at high temperature and these treatment methods can be broadly divided further into a burning method and a plasma method.

The burning method is an organic halogen compound decomposition method that uses a cement kiln, a catalyst, and the like. The plasma method involves causing the organic halogen compound to react with water vapor in plasma and thereby be broken down into carbon dioxide, hydrogen chloride, and hydrogen fluoride.

An example of the plasma method is that described in Japanese Patent No. 2134675 in which an organic halogen compound is decomposed by generating high frequency inductive plasma using a high frequency power source.

Decomposition methods are also proposed in Japanese Patent Application No. Hei 7-308952 and Japanese Patent Application No. Hei 7-332580 in which arc plasma generated by a direct current power source is used.

Other devices for decomposing organic halogen compounds include those that use plasma generated using microwaves.

Decomposition methods that use microwave plasma employ a circular cylinder wave guide extending in a vertical direction above the plasma generating section (decomposition section); an electric discharge pipe provided inside the circular cylinder wave guide and penetrating through the bottom end thereof so as to communicate with a reaction pipe; a square wave guide connected with the circular cylinder wave guide in the vicinity of an end portion thereof; and a microwave transmitter or the like mounted at the other end of the square wave guide.

In this decomposition method, while organic halogen compound and water vapor are supplied to the electric discharge pipe, microwaves transmitted by the microwave transmitter are transmitted to the circular cylinder wave guide via the square wave guide.

An electrical discharge is then created in a microwave electric field formed by $TM_{01}$ mode inside the circular cylinder wave guide, and the organic halogen compound is decomposed by thermal plasma.

In these plasma methods, it is necessary to stabilize the plasma for continuous long period of time by preventing the pressure variations that accompany temperature changes in order to secure the smooth circulation of fleon gas and the like, and by preventing the admixture of foreign matter in the decomposition section in order to suppress the generation of byproducts and contamination in the distribution pipes.

However, it has not been possible to achieve this satisfactorily in conventionally proposed decomposition apparatuses.

Further, another example is a plasma based organic halogen compound decomposition apparatus that generates plasma using microwaves and includes: a discharge gas treatment tank that holds alkali solution; a reaction pipe positioned such that the open bottom end portion thereof is immersed in the alkali solution; a circular cylinder wave guide extending in a vertical direction above the reaction pipe; a square wave guide connected to the circular cylinder wave guide in the vicinity of an end portion thereof; and a microwave transmitter or the like mounted at the other end of the square wave guide.

In this decomposition apparatus, while organic halogen compound and water vapor are supplied to the electric discharge pipe, microwaves transmitted by the microwave transmitter are transmitted to the circular cylinder wave guide via the square wave guide.

An electrical discharge is then created in a microwave electric field formed inside the circular cylinder wave guide, and the organic halogen compound is decomposed by thermal plasma in the reaction pipe.

The gas generated by this decomposition reaction is neutralized by being passed through the alkali solution and the remaining gas which includes carbon dioxide and the like is discharged from discharge ducts.

In this type of decomposition apparatus, a heater is provided for generating water vapor by heating water supplied from a water source.

However, because conventional heaters are structured so as to heat water from a water source as it passes through a penetrating flow passage having a circular cross section, they have the following problems.

Namely, the water is not heated uniformly because not only does the water pass through the flow passage in a short period of time, but only a small area of the flow passage wall surface is in contact with the water.

As a result, water splashes caused by rippling and sudden boiling tend to occur resulting in water vapor not be supplied stably to the electric discharge pipe and creating concern that the removal of the plasma and the decomposition reaction will become unstable.

Moreover, in this plasma method, if the organic halogen compound and the water vapor are not sufficiently mixed, the decomposition reaction is also insufficient and byproducts such as hydrogen chlorides and carbon monoxide and the like are given off.

Therefore, it is necessary that the two be mixed thoroughly in order to stabilize the decomposition reaction and thereby prevent byproducts from being generated.

However, in conventionally proposed decomposition apparatuses there has been a complete lack of steps to accelerate the mixing of the organic halogen compounds and the water vapor resulting in the mixing not being performed satisfactorily, which, in turn, has led to a tendency for byproducts to be generated.

Moreover, when fleon gas and water vapor are supplied to the electric discharge pipe, electrical discharge is created in a microwave electric field formed inside the circular cylinder wave guide, and the fleon gas is decomposed by thermal plasma in the reaction pipe. For example, in the case of fleon R12, the chemical reaction shown in the formula below occurs and the fleon is decomposed.

$$CCl_2F_2 + 2H_2O \rightarrow 2HCl + 2HF + CO_2$$

In this case, in order to stabilize and decompose the fleon, after heating water to change it into water vapor, it is necessary to mix this uniformly with the fleon gas at a fixed ratio.

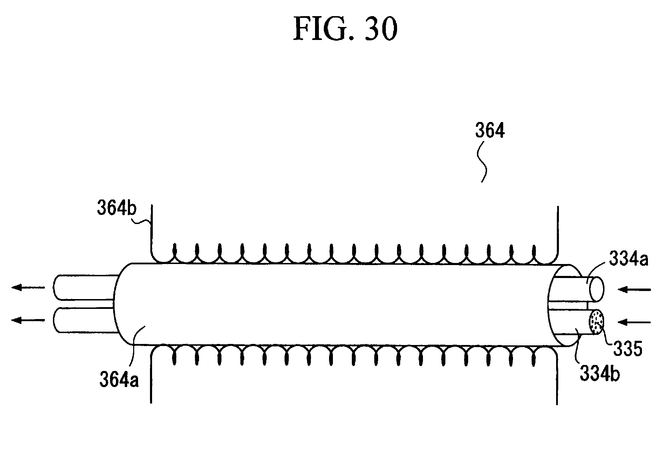

Therefore, a fluid beating apparatus such as that shown in Fig. 30 has been examined.

In this fluid heating apparatus 364, flow passages 334a and 334b through which flow fleon gas and water respectively are provided inside the pipe 364a. A heater 364b for heating the fluids flowing through the flow passages 334a and 334b is provided at the periphery of the pipe 364a. The interior of the water flow pipe is also filled with a resisting member 335 for stabilizing the flow rate by preventing the water from boiling up when the water is vaporized.

In this fluid heating apparatus, the water of the fluid solution and the fleon gas are introduced respectively into the flow passages 334a and 334b and the fleon and water are heated as they pass through the flow passages to a temperature without the water being condensed.

Thereafter, the water and fleon gas are uniformly mixed in a mixer and plasma decomposition is performed.

It should be noted that, in the above fluid heating apparatus, there is a space between the heater 364b and the flow passages 334a and 334b so that the heater 364b does not apply direct heat to the flow passages but heats the fluid within the flow passages via this space.

As a result, because time is required for the heat to be conducted across the space, if there is any flow variation in the fluid, differences arise in the heating temperature. In particular, when heating water, the load of the fluid within the flow passage varies due to the vaporization in spite of the resisting member 335 being provided resulting in the water heating amount, namely, the vaporization amount being unstable.

Moreover, it is necessary to control the heater in order to control the fluid heating amount, however, heating the fluid to the target temperature by controlling the output of the heater is not an easy matter as it requires that consideration be given to the amount of heat that leaks to the outside and the like.

The problems generated as a result of the above are that the amount of water vapor supplied to the electric discharge pipes is not stable, the fleon decomposition reaction is not stable, and, in some cases, the plasma may even be lost.

SUMMARY OF THE INVENTION

The present invention was achieved in consideration of the above circumstances and it is a first object thereof to guarantee stable conditions for decomposition by supplying organic halogen compound in an efficiently and stably purified state.

The present inventors made the following discoveries after investigating the stabilization of the decomposition treatment.

Because lubricating oil is mixed in with recovered fleon (organic halogen compound) used as a refrigerant in air conditioners and the like in order to prevent seizing of moving parts of the compressor, if the oil is introduced as it is into the system, the concern exists that contaminants will become adhered to the piping system and that soot and harmful byproducts will be generated.

Moreover, because the recovered fleon that is wet stored inside the cylinder snatches a great deal of the surrounding heat during vaporization, mist tends to be generated in the cylinder and in the pipes downstream from the cylinder bringing about variations in pressure due to temperature reductions and having an adverse effect on the stable supply of fleon gas and the like.

If the fleon gas and the like are not supplied cleanly and stably into the system for the above reasons, there is a harmful effect on the stabilization of the plasma leading to a reduction in the decomposition treatment performance.

Therefore, the structure described below was employed in the present invention in order to solve the above problems.

The first aspect of the present invention is a decomposition apparatus for organic halogen compounds which generates thermal plasma by irradiating microwaves onto a gas containing organic halogen compounds and decomposes organic halogen compounds in the plasma, wherein a mist separator for separating and removing a mist of oil and moisture elements and the like mixed with the organic halogen compounds is provided on a transit path that leads from a cylinder containing organic halogen compound are contained to a plasma generating section.

In this decomposition apparatus, even if the organic halogen compound to be decomposed is a refrigerant that has been recovered from air conditioners or the like, because it is possible to separate and remove oil elements mixed in with the refrigerant before the refrigerant is introduced into the plasma generating section, there is no contaminating of the piping system or generating of byproducts.

The second aspect of the present invention is a decomposition apparatus for organic halogen compounds which generates thermal plasma by irradiating microwaves onto a gas containing organic halogen compounds and decomposes organic halogen compounds in the plasma, wherein a flow rate adjustment means is provided for suppressing variations in a volume flow rate of organic halogen compounds circulating towards the plasma generating section

In this decomposition apparatus, even if variations in pressure are brought about by temperature reductions when the organic halogen compound is vaporized, it is possible to suppress variations in the volume flow rate of the organic halogen compound fed by the flow rate adjustment means to the downstream side thereof, and consequently, a stable supply to the plasma generating section becomes possible.

The third aspect of the present invention is the decomposition apparatus for organic halogen compounds according to the second aspect of the present invention, wherein the flow rate adjustment means is provided with a temperature adjustment apparatus for keeping constant a gas temperature inside a cylinder containing organic halogen compound.

Because the temperature and pressure of the saturated vapor remaining in a two phase state of separation together with the saturated solution inside the cylinder is determined by the type of the organic halogen compound, the discharge pressure from the cylinder can be controlled by adjusting the temperature of the saturated vapor, namely, of the gas.

In this decomposition apparatus, because the discharge pressure also is kept constant by keeping the temperature of the saturated vapor constant, variations in the volume flow rate of the organic halogen compound are effectively suppressed.

The fourth aspect of the present invention is the decomposition apparatus for organic halogen compounds according to the second aspect of the present invention, wherein the flow rate adjustment means is provided with a restricting apparatus whose aperture cross sectional area is controlled so as to be able to be varied in accordance with a gas pressure of organic halogen compounds upstream from the flow rate adjustment means.

The volume flow rate when the amount remaining in the cylinder is sufficient is determined solely by the aperture cross sectional area of the restricting apparatus and there are no variations in the volume flow rate even if there are variations in the pressure.

The volume flow rate when the amount remaining in the cylinder decreases and the gas pressure is below a predetermined value, however, is determined by the differential pressure between the aperture cross sectional area and the restricting apparatus. Therefore, if there are variations in the differential pressure, then there are also variations in the volume flow rate.

Because the pressure downstream from the restricting apparatus is fixed substantially at atmospheric pressure, variations in the differential pressure are generated solely depending on the pressure variations upstream from the restricting apparatus.

In this decomposition apparatus, because variable control of the aperture cross sectional area of the restricting apparatus can be performed in accordance with the pressure upstream from the restricting apparatus, even if the gas pressure drops below a predetermined value as the time in operation becomes longer, it is possible to effectively suppress variations in the volume flow rate of the organic halogen compound.

The fifth aspect of the present invention is the decomposition apparatus for organic halogen compounds according to the second aspect of the present invention, wherein the flow rate adjustment means is provided with a pressure control valve for keeping a gas pressure of an organic halogen compound upstream of the flow rate adjustment means at a constant pressure, and with a restricting apparatus provided downstream from the flow rate adjustment means.

As described above, if the amount remaining in the cylinder decreases and the gas pressure falls below a predetermined value, the volume flow rate is determined by the aperture cross sectional area and the pressure upstream from the restricting apparatus.

In this decomposition apparatus, because the gas pressure upstream from the restricting apparatus is kept constant using a pressure control valve, even if the gas pressure drops below a predetermined value as the time in operation becomes longer, it is possible to effectively suppress variations in the volume flow rate of the organic halogen compound.

The sixth aspect of the present invention is the decomposition apparatus for organic halogen compounds according to the second aspect of the present invention, wherein the flow rate adjustment means is provided with a restricting means for vaporizing organic halogen compounds flowing out in a liquid state from a cylinder, and a heating apparatus for heating organic halogen compounds passing through the restricting means to fixed temperature and keeping the organic halogen compounds at the fixed temperature.

The volume flow rate when the organic halogen compound flows out from the cylinder in a liquid state is determined by the differential pressure between the restricting apparatus and the aperture cross sectional area.

In this decomposition apparatus, by heating the organic halogen compounds that pass through the restricting apparatus to a fixed temperature and then keeping them at this fixed temperature using the heating apparatus, because the differential temperature is also held constant as a result of the pressure upstream from the restricting apparatus being held constant, it is possible to effectively suppress variations in the volume flow rate of the organic halogen compound

The second object of the present invention lies in preventing plasma loss and stabilizing the decomposition reaction through the stable supply of dried water vapor.

In order to meet the above aim, the structures described below arc employed in the present invention.

Namely, the seventh aspect of the present invention is a decomposition apparatus for organic halogen compounds which generates thermal plasma by irradiating microwaves onto a gas containing organic halogen compounds and decomposes organic halogen compounds in the plasma by reacting the organic halogen compounds with water vapor, wherein the decomposition apparatus for organic halogen compounds is provided with a beater for generating water vapor by causing water supplied from a water source to pass through a flow passage provided in the heater body, and a filling member is provided in the flow passage so as to block the flow passage while leaving a gap running from the entry side to the exit side of the flow passage.

In this structure, not only is the smooth circulation of the water inside the heater prevented, but as the water is distributed between each of the gaps in the flow passage and is thereby heated not only from the inner peripheral wall surface inside the flow passage but also from the inner side, the water inside the beater is uniformly heated with the water in contact with the heater for a sufficient length of time and a sufficient surface area of the water being in contact with the heater and is thereby changed to water vapor.

Moreover, because the water vapor generated in this way is also unable to circulate smoothly inside the flow passage, a constant amount of water vapor is always retained inside the heater and the outflow amount is stable.

Note that an organic or inorganic granulated member, a fibrous member, a porous member, or the materials that form these is employed for the filling material

The eighth aspect of the present invention is the decomposition apparatus for organic halogen compounds according to the seventh aspect of the present invention, wherein the filling member is formed from an inorganic material.

In this structure, deterioration of the filling member in a high temperature environment can be effectively prevented.

An inorganic material such as an oxide, carbide, nitride, and the like typified by $SiO_2$, $Al_2O_3$, $TiO_2$, $MgO$, $ZrO_2$, and the like is employed as the inorganic material.

The ninth aspect of the present invention is the decomposition apparatus for organic halogen compounds according to the seventh aspect of the present invention, wherein a second flow passage for circulating organic halogen compounds is formed in the heater separately from the flow passage.

In this structure, because the organic halogen compound is preheated before it is mixed with the water vapor, the water vapor is not recondensed by being cooled by the organic halogen compound.

Moreover, because the preheating heater used to preheat the organic halogen compound is formed integrally with the heater for generating the water vapor, it is possible to achieve effective use of the heat source and to conserve space.

The third object of the present invention lies in stabilizing the decomposition reaction by sufficiently mixing the water vapor and the organic halogen compound.

In order to meet the above aim, the structures described below are employed in the present invention.

The tenth aspect of the present invention is a decomposition apparatus for organic halogen compounds which generates thermal plasma by irradiating microwaves onto a gas containing organic halogen compounds and decomposes organic halogen compounds in the plasma by reacting the organic halogen compounds with water vapor, wherein the decomposition apparatus for organic halogen compounds is provided with a mixer in a section where water vapor and organic halogen compound supplied by a separate system flow together, and a resisting member is provided inside the mixer section so as to partially block the circulation of the water vapor and the organic halogen compound.

In this decomposition apparatus, not only are the water vapor and organic halogen compounds that are supplied from separate systems simply allowed to flow together in a confluent section, but because the water vapor and organic halogen compounds inside the mixer are diffused by striking the resisting member and the flow directions of each are changed so that they collide with each other, the mixing together of the two is accelerated.

The eleventh aspect of the present invention is the decomposition apparatus for organic halogen compounds according to the tenth aspect of the present invention, wherein an orifice provided inside the mixer is employed as the resisting member.

In this decomposition apparatus, after the flow directions of the water vapor and the organic halogen compounds that have been fed into the mixer have been changed by striking against the orifice, the two are made to collide against each other thereby accelerating the mixing upstream from the orifice.

Moreover, because turbulence is formed downstream from the orifice, even more thorough mixing is achieved downstream from the orifice.

The twelfth aspect of the present invention is the decomposition apparatus for organic halogen compounds according to the tenth aspect of the present invention, wherein a granulated material with which the mixer is filled is employed as the resisting member.

In this decomposition apparatus, because the water vapor and organic halogen compounds that have been fed into the mixer are circulated at random in the gaps between granular bodies and the two are made to collide together in the circulation process, the mixing is accelerated.

The thirteenth aspect of the present invention is the decomposition apparatus for organic halogen compounds according to the tenth aspect of the present invention, wherein baffle plates provided at alternating intervals on facing internal peripheral surfaces inside the mixer are employed as the resisting member.

In this decomposition apparatus, because the flow paths of the water vapor and the organic halogen compounds that have been fed into the mixer are changed as the two are made to collide against baffle plates and to circulate in a zigzag manner inside the mixer, the mixing of the two is accelerated.

The fourteenth aspect of the present invention is a decomposition apparatus for organic halogen compounds which generates thermal plasma by irradiating microwaves onto a gas containing organic halogen compounds and decomposes organic halogen compounds in the plasma by reacting the organic halogen compounds with water vapor, wherein the decomposition apparatus for organic halogen compounds is provided with a mixer in a section where water vapor and organic halogen compound supplied by a separate system flow together, and a plurality of inclined nozzles for separately introducing water vapor and organic halogen compounds are provided at the mixer entry side, and these inclined nozzles are inclined at predetermined angles towards the exit side of the mixer relative to the outer peripheral tangential direction of the mixer.

In this decomposition apparatus, because the water vapor and the organic halogen compounds that have been fed into the mixer via the nozzles are circulated while they form a swirl pattern, the mixing of the two is accelerated.

The fourth object of the present invention lies in providing a fluid heating apparatus capable of stably supplying fluid. Moreover, another object of the present invention lies in providing a decomposition apparatus for organic halogen compounds which stabilizes the plasma and achieves an improvement in the treatment performance.

In order to meet the above objects, the structures described below are employed in the present invention.

The fifteenth aspect of the present invention is a fluid heating apparatus including: a sealed container; a heating medium contained within the sealed container; a heater for heating the heating medium; and a fluid passage that penetrates through the sealed container and through which flows a fluid.

In this fluid heating apparatus, firstly, the interior of the fluid beating apparatus is placed in a vacuum, a heating medium such as water or the like is then sealed inside, and the apparatus is shut tight. In this state, the vapor and the liquid heating mediums are mixed together.

When the water heating medium is heated by the heater, a portion thereof is vaporized. This gas is cooled by the fluid inside the flow passage and condenses. Namely, because the vapor heating medium, which has become a heat source, directly heats the flow passage by condensation heat transfer, the heat conduction time is extremely short and stable heating can be performed.

The condensed heating medium is once again heated by the heater and vaporized and the same processes as described above are repeated. As a result, the vapor heating medium, which has become a heat source, can be stably and continually supplied.

The sixteenth aspect of the present invention is the fluid heating apparatus according to the fifteenth aspect of the present invention, wherein the sealed container is provided with a vaporization chamber that is provided with a heater, and with a liquefaction chamber, which is provided above the vaporization chamber and communicates with the vaporization chamber, through which the flow passage penetrates.

In this fluid heating apparatus, the heating medium that has been vaporized in the vaporization chamber moves to the liquefaction chamber side. The heating medium that is then heated and condensed in the liquefaction chamber is moved by gravity down towards the vaporization chamber, is heated again by the heater and the same processes as described above are repeated. As a result, the vapor heating medium, which has become a heat source, can be stably and continually supplied.

The seventeenth aspect of the present invention is the fluid heating apparatus according to the sixteenth aspect of the present invention, wherein the liquefaction chamber has a sloping bottom surface and the liquefaction chamber and the vaporization chamber are connected together at the bottom end of the slope of the bottom surface.

In this fluid heating apparatus, because the bottom surface of the liquefaction chamber is formed with a slope, the heating medium that has been condensed in the liquefaction chamber runs down the bottom surface due to gravity and moves into the vaporization chamber. As a result, the condensed heating medium moves rapidly towards the vaporization chamber and is heated again and vaporized. As a result, the vapor heating medium, which has become a heat source, can be stably and continually supplied.

The eighteenth aspect of the present invention is the fluid heating apparatus according to the sixteenth or seventeenth aspects of the present invention, wherein the flow passage slopes in the longitudinal direction thereof.

In this fluid heating apparatus, because the flow passages are formed with a slope, the heating medium that has been condensed on the surface of the pipes forming the flow pipes runs down the pipe surface due to gravity and moves into the vaporization chamber. The heating medium is then heated once again in the vaporization chamber and vaporized. Namely, the condensed heating medium can be removed rapidly and the flow passage heated by new gas. As a result, the heating medium, which has become a heat source, can be stably and continually supplied.

The nineteenth aspect of the present invention is the fluid heating apparatus according to fifteenth to eighteenth aspects of the present invention, wherein a resisting member is provided inside the flow passage.

In this fluid heating apparatus, a resisting member for providing resistance to the fluid moving in the flow chamber is provided in the flow chamber, thereby preventing the fluid that has been vaporized inside the flow passage from flowing smoothly.

As a result, a constant amount of vaporized fluid is always retained inside the flow passage.

Therefore, water splashes caused by rippling and sudden boiling are prevented and the water vapor outflow rate is stabilized, and variations in the flow rate are suppressed.

The twentieth aspect of the present invention is the fluid heating apparatus according to the fifteenth to nineteenth aspects of the present invention, wherein the fluid heating apparatus is provided with a pressure detector for detecting a pressure of the heating medium, and a pressure control apparatus for controlling an output of the heater based on an output from the pressure detector.

In this fluid heating apparatus, the temperature to which the fluid is heated is determined by adjusting the pressure.

Namely, although there are slight variations due to the amount of vaporization of the heating medium inside the sealed container, it can be safely said that the volume of the vapor portion in the sealed container remains constant. Therefore, the temperature of the heating medium is determined solely by the pressure inside the system. Namely, the temperature to which the fluid is heated is determined by the pressure inside the system.

In this fluid heating apparatus, because a pressure detector is provided to detect the pressure of the heating medium, the output of the pressure detector is fed back to the heater via the pressure control means. Therefore, the target pressure, namely, the temperature can be easily set.

The twenty-first aspect of the present invention is a decomposition apparatus for organic halogen compounds that is provided with a fluid heating apparatus for heating water, wherein the fluid heating apparatus includes: a sealed container; a heating medium contained within the sealed container, a heater for heating the heating medium; and a fluid passage that penetrates through the sealed container and through which flows a fluid.

In this fluid heating apparatus provided in a decomposition apparatus for organic halogen compounds, the interior of the sealed container is placed in a vacuum, a beating medium such as water or the like is then sealed inside, and the apparatus is shut tight. In this state, the vapor and the liquid heating mediums are mixed together in the sealed container.

When the liquid heating medium is heated by the heater, a portion thereof is vaporized. This gas is cooled by the fluid inside the flow passage and condenses. Namely, because the vapor heating medium, which has become a heat source, directly heats the flow passage by condensation heat transfer, the heat conduction time is extremely short and stable heating can be performed.

The condensed heating medium is once again heated by the heater and vaporized and the same processes as described above are repeated. As a result, the vapor heating medium, which has become a heat source, can be stably and continually supplied.

As a result of the above, in this decomposition apparatus for organic halogen compounds, because water vapor which is made to react when decomposing organic halogen compounds such as fleon is stably supplied, it is possible to stably decompose organic halogen compounds.

BRIEF DESCRIPTION OF THE DRAWINGS

Fig. 1 is a view of the system structure showing the first embodiment of the present invention.

Fig. 2 is an enlarged view of the principal portions of the same decomposition apparatus.

Fig. 3 is a perspective view showing the overall structure of the decomposition apparatus of the first embodiment.

Fig. 4 is a cross sectional view of the principal portions of the mixer provided in the same decomposition apparatus.

Fig. 5A is a front elevational view showing an example of a mist separator, while Fig. 5B is a cross sectional view of the principal portions of Fig. 5A.

Fig. 6 is a cross sectional view showing another example of a mist separator.

Fig. 7 is a view of the system structure showing the principal portions of another embodiment of the present invention.

Fig. 8 is a view of the system structure showing the principal portions of yet another embodiment of the present invention.

Fig. 9 is a comparative view showing the timings of the supply of microwaves, argon gas and the like and the timing of the ignition in a time sequence graph.

Fig. 10 is a view of the system structure showing the second embodiment of the present invention.

Fig. 11 is an enlarged view of the principal portions of the same decomposition apparatus.

Fig. 12 is a perspective view showing the overall structure of the decomposition apparatus of the second embodiment.

Fig. 13 is a cross sectional view of the principal portions of the mixer provided in the same decomposition apparatus.

Fig. 14 is an enlarged cross sectional view of the heater provided in the same decomposition apparatus.

Fig. 15 is a comparative view showing the timings of the supply of microwaves, argon gas and the like and the timing of the ignition in a time sequence graph.

Fig. 16 is a view of the system structure showing the third embodiment of the present invention.

Fig. 17 is an enlarged view of the principal portions of the same decomposition apparatus.

Fig. 18 is a perspective view showing the overall structure of the decomposition apparatus of the third embodiment.

Fig. 19 is a cross sectional view of the principal portions of the mixer provided in the same decomposition apparatus.

Fig. 20 is a comparative view showing the timings of the supply of microwaves, argon gas and the like and the timing of the ignition in a time sequence graph.

Fig. 21 is a cross sectional view of a mixer according to another embodiment of the present invention.

Fig. 22 is a cross sectional view of a mixer according to yet another embodiment of the present invention.

Fig. 23A is a plan view of a mixer according to yet a further embodiment of the present invention, while Fig. 23B is a cross sectional view showing the state of the swirl flow formed inside the same mixer.

Fig. 24 is a partial cross sectional view showing an embodiment of the fluid heating apparatus according to the present invention.

Fig. 25 is a view of the system structure showing an embodiment of the decomposition apparatus according to the present invention.

Fig. 26 is an enlarged view of the principal portions of the same decomposition apparatus.

Fig. 27 is a perspective view showing the overall system structure of the decomposition apparatus of the present embodiment.

Fig. 28 is a cross sectional view of the principal portions of the mixer provided in the same decomposition apparatus.

Fig. 29 is a comparative view showing the timings of the supply of microwaves, argon gas and the like and the timing of the ignition in a time sequence graph.

Fig. 30 is a perspective view showing an example of a fluid heating apparatus.

DESCRIPTION OF THE PREFERRED EMBODIMENTS

(First Embodiment)

The first embodiment of the present invention will now be described with reference to the drawings.

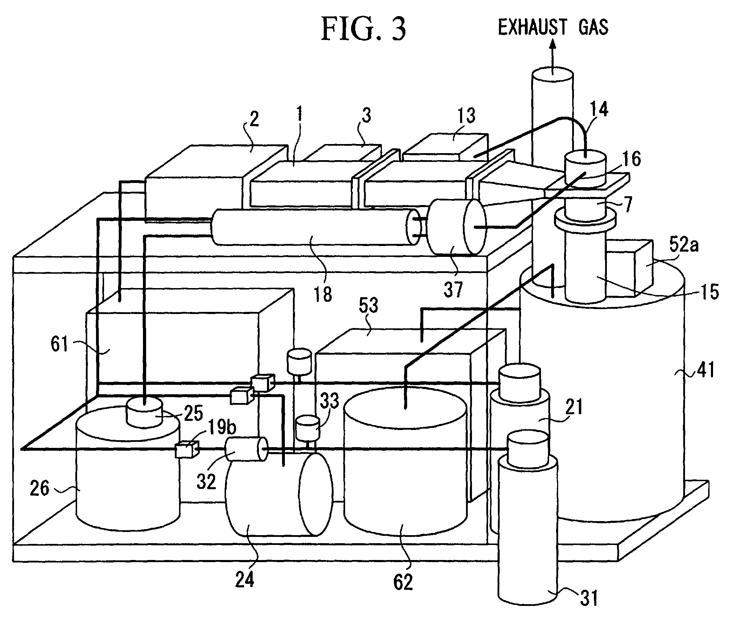

A square wave guide 1 extending in the horizontal direction in Fig. 3 is provided with a microwave transmitter 2 at the starting end portion thereof (i.e. the left hand side in the drawing) for transmitting microwaves at a frequency of 2.45 GHz and sending these microwaves from the starting end side towards the terminal end side (i.e. towards the right hand side of the drawing).

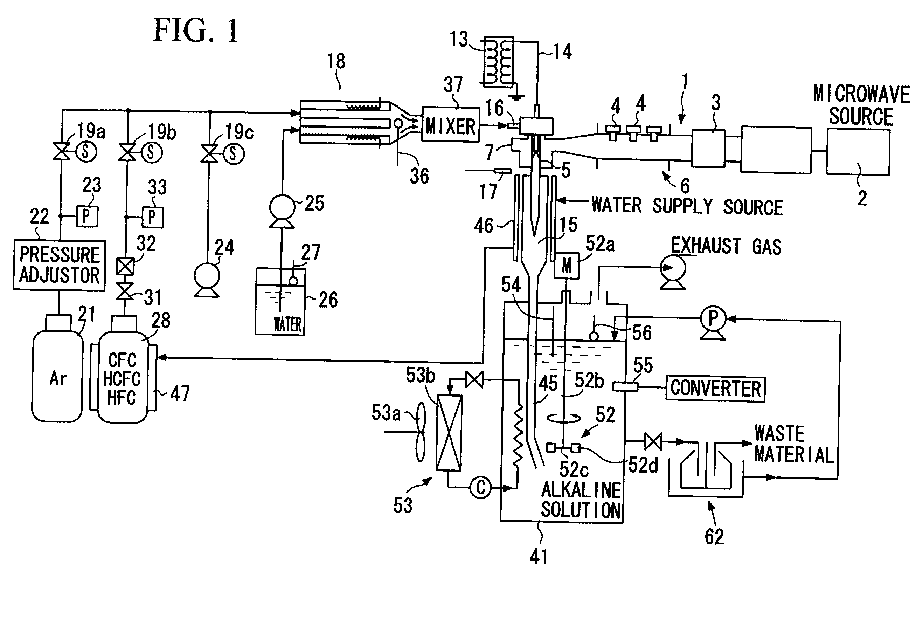

As is shown in Fig. 1, the square wave guide 1 is provided with an isolator 3 for preventing reflected microwaves that are reflected by the terminal end side so as to end up coming back towards the starting end side from affecting the transmitting side by absorbing these microwaves. The square wave guide 1 is also provided with a tuner 6 which causes each of a plurality of wave motion adjusting members 4 to be inserted or retracted so as to adjust the amount of inconsistency in the wave motion and thereby converge the electric waves at the electric discharge pipe 5.

This operation is described below in more detail.

The microwave transmitter 2 drives a magnetron placed at one end of a wave guide pipe having a rectangular cross section so as to radiate electromagnetic waves in a predetermined frequency. The characteristics of the propagation phenomenon of these electromagnetic waves could be ascertained by solving Maxwell's wave motion equation for electromagnetic waves, however, the end result would be that the waves are propagated as electromagnetic TE waves that have no electric field component in the propagation direction.

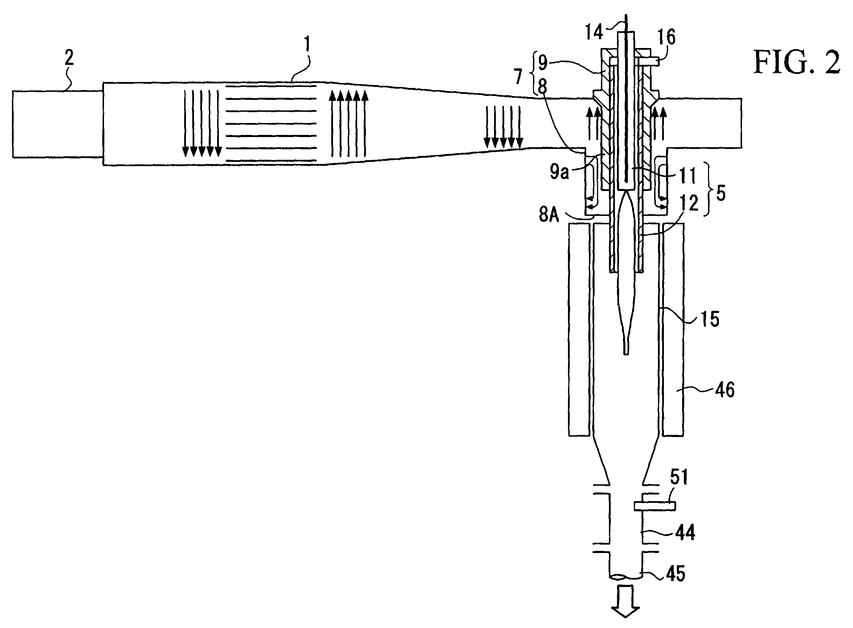

An example of these primary components $TE_{10}$ is shown by the propagation directions in the rectangular wave guide pipe in Fig. 2 by the orthogonally intersecting arrows.

Moreover, TM waves having electric field components in the direction of movement are generated in the annular cavity portion of a double circular cylinder wave guide pipe including a double circular cylinder conductor at the other end portion of the rectangular wave guide pipe 1 by the bonding action of the electromagnetic waves propagated in the wave guide pipe 1 with the electromagnetic waves reflected by the end of the pipe caused by the conductor 9.

The $TM_{01}$ waves that form this primary component are shown by the arrows in the annular cavity portion in Fig. 2.

Delicate adjustment of the propagation of the wave motion of the electromagnetic waves arising from secondary and greater higher harmonics is made by the tuner 4.

The isolator 3 protects the transmitter 2 from basic damage.

In this way, a stable mode $TM_{01}$ electric field is formed inside the circular cylinder wave guide pipe 7.

Naturally, a magnetic field is generated in a direction orthogonally intersection the electric field.

Because substances inserted into the relevant portion by the vibrating electromagnetic field are heated to a plasma state, if a high voltage is applied to electrodes 13 connected to the ignition device 13, an electric spark discharge is generated between the electrode 13 and an inner conductor 9 and ignition takes place.

As is shown in Fig. 2, the circular cylinder wave guide pipe 7 is formed from an outer conductor 8 and an inner conductor 9 having a smaller diameter than the outer conductor 8. The circular cylinder wave guide pipe 7 is connected to the vicinity of the terminal end portion of the square wave guide pipe 1 so as to extend in a vertical direction while communicating with the square wave guide pipe 1.

The inner conductor 9 is fixed to the top portion of the square wave guide pipe 1 and extends towards an end plate 8A of the outer conductor 8 while surrounding a quartz electric discharge pipe 5. This extended portion forms a probe antenna 9a.

The electric discharge pipe 5 is formed from an inner pipe 11 and an outer pipe 12 and is placed so as to be coaxial with the central axis of the circular cylinder wave guide pipe 7.

Moreover, conductor wires 14 connected to the ignition device 13 are inserted inside the inner pipe 11 of the electric discharge pipe 5.

By generating a high voltage and applying this to the distal end of the conductor wires 14, the ignition device 13 causes electric sparks to be discharged between itself and the inner conductor 9 thereby igniting the plasma.

The distal end portion of the outer pipe 12 communicates with a metallic reaction pipe 15 through the end plate 8A of the outer conductor 8. The proximal end (i.e. the top end in the drawing) of the outer pipe 12 is mounted with a gap between itself and the inner conductor 9.

The symbol 17 denotes an optical sensor for observing the state of plasma generation by detecting the luminosity.

A gas supply pipe 16 is inserted into the above gap at a tangential direction to the outer pipe 12. Argon gas, fleon gas (organic halogen compounds), air, and water vapor are supplied to the electric discharge pipe 5 via the gas supply pipe 16.

The argon gas, fleon gas, and air are selectively fed to the heater 18 from their respective supply sources.

Because the argon gas is supplied so as to facilitate the ignition prior to the plasma generation, it is stored in an argon cylinder 21.

A pressure adjustor 22 and a pressure switch 23 are provided between the argon cylinder 21 and an electromagnetic valve 19a.

Air is supplied from an air compressor 24 in order to increase the stability of the ignition by removing moisture remaining in the system and in order to expel gas remaining in the system.

Because water vapor is necessary for the decomposition of the fleon gas, it is generated by feeding water from a water storage tank 26 using a plunger pump 25 to the heater 18.

A level switch 27 is provided in the water storage tank 26 for detecting variations in the water level.

The fleon gas is wet stored in a recovered fleon cylinder 28. A restricting apparatus 31, a mist separator 32, and a pressure switch 33 are provided between the recovered fleon cylinder 28 and an electromagnetic valve 19b.

The restricting apparatus 31 is provided in order to obtain a constant flow rate and may be formed from a capillary pipe and orifice combination, for example.

The mist separator 32 is intended to remove oil elements (lubricating oil), moisture, as well as solid elements such as sludge that are contained in the fleon gas, and an impact type or filter type separator is used.

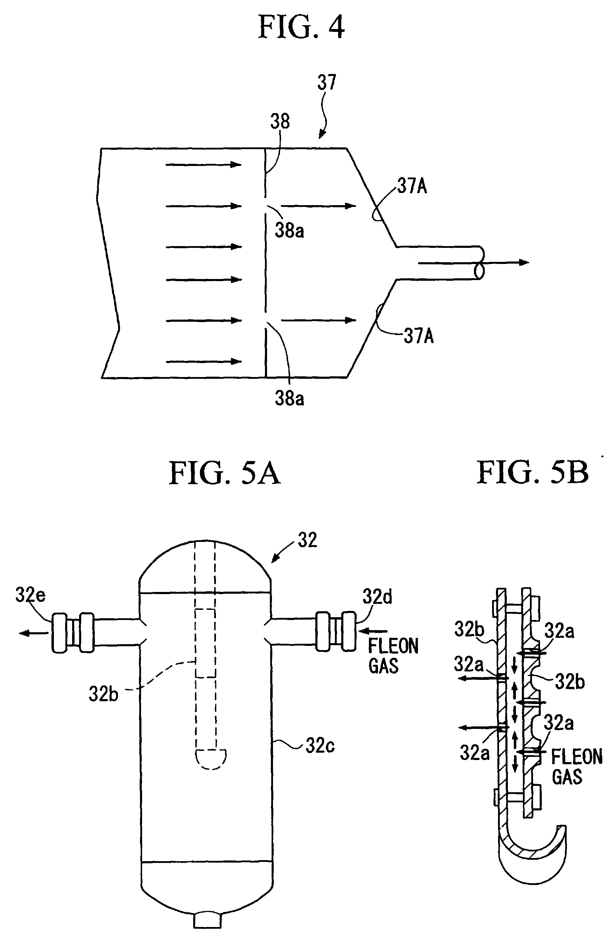

As is shown in Fig. 5, for example, an impact type mist separator includes two baffle plates 32b, in each of which are formed a plurality of small holes 32a, superposed inside a casing 32c such that the small holes 32a do not communicate in the axial direction. Fleon gas fed in from an intake aperture 32d and flowing towards a discharge aperture 32e is impacted against the baffle plates 32b, thereby removing oil beads and water drops contained therein by causing them to adhere to the baffle plate 32b and drip downwards.

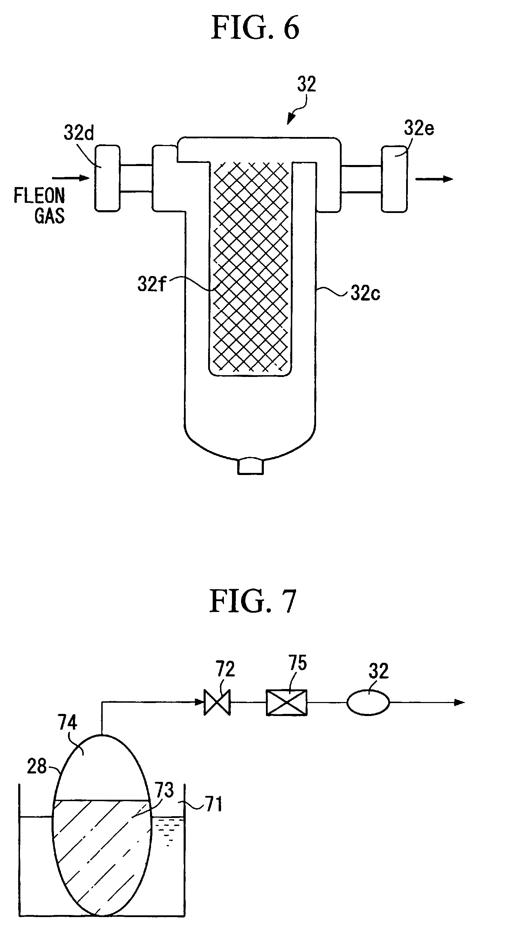

As is shown in Fig. 6, for example, a filter type mist separator is formed by placing a porous filter 32f on the route that the fleon gas fed in from the intake aperture 32d travels along towards the discharge aperture 32e. Oil, water, and solid elements over a certain diameter that are contained in the fleon gas are removed.

A centrifugal separation type separator may also be used in addition to those above. A centrifugal separator removes oil beads and water droplets by spinning the fleon gas inside it and causing these elements to be blown out of the gas by their own weight.

The heater 18 not only generates water vapor for reacting with the fleon gas, but is also intended to prevent trouble, such as water vapor inside the apparatus being cooled by the fleon gas and the like and recondensing, by heating the fleon gas and the like in advance. An electric type or steam type of heating method is employed in the heater 18.

Fleon gas and the like and water vapor that have transited the heater 18 are mixed together in a mixer 37 and thereafter supplied to electric discharge pipe 5 via the gas supply pipe 16.

An exhaust gas treatment tank 41 is provided in order to render harmless acidic gas (hydrogen fluoride and hydrogen chloride) generated when the fleon gas is decomposed by neutralizing it. An alkaline suspension solution including water to which calcium hydroxide has been added is contained in the exhaust treatment tank 41.

For example, if the fleon gas to be decomposed is fleon R12 for use as a refrigerant that has been recovered from discarded refrigerators, the gas generated by the decomposition reaction shown in Formula 1 can be rendered harmless by the neutralization reaction shown in Formula 2.

(Formula 1)

$$CCl_2F_2 + 2H_2O \rightarrow 2HCl + 2HF + CO_2$$

(Formula 2)

$$2HCl + Ca(OH)_2 \rightarrow CaCl_2 + 2H_2O$$

$$2HF + Ca(OH)_2 \rightarrow CaF_2 + 2H_2O$$

An intake pipe 45 connected to the reaction pipe 15 via an exchange coupling 44 is placed inside the exhaust gas treatment tank 41 so as to extend in a vertical direction with the bottom end portion thereof immersed in the alkali solution.

A cooler 46 provided with cold water pipes (not illustrated) is provided at the periphery of the reaction pipe 15.

The cooler 46 is provided to cool the gas generated by the decomposition reaction shown in Formula 1, however, it is controlled so that it only cools to above the dew point so as to prevent recondensation of the water vapor remaining inside the reaction pipe 15.

In the present embodiment, the gas is cooled to approximately 400°.

Effective use is made of the cooling water in the cooler 46 that has been warmed up from cooling the reaction pipe 15 (i.e. the warm water) by using it as a source of heat for heating the recovered fleon gas cylinder 28.

Namely, a heater 47 provided with warm water pipes (not illustrated) is provided at the periphery of the recovered fleon cylinder 28, and the recovered fleon cylinder 28 is heated by allowing cooling water that has been used to cool the reaction pipe 15 to circulate through the warm water pipes.

As is shown in Fig. 2, the exchange coupling 44 is able to be connected and disconnected between the reaction pipe 15 and the intake pipe 45 and a water injection nozzle 51 communicates with the interior of the exchange coupling 44.

Cooling water is sprayed from the water injection nozzle 51 so that the intake pipe 45 made from a resin, for example, Teflon is rapidly cooled to within a heatproof temperature range.

Gas generated by the decomposition reaction shown in Formula 1 is bubbled through the alkaline solution from the distal end (bottom end) of the intake pipe 45 and then discharged.

Because the neutralizing reaction in the alkaline solution is accelerated the greater the area of contact between the gas bubbles and the alkaline solution and the longer the time before the gas bubbles reach the surface of the solution, a bubble dividing means 52 is provided in the exhaust gas treatment tank 41 for accelerating the neutralization reaction shown in Formula 2 by dividing the gas bubbles into even smaller bubbles.

The bubble dividing means 52 is formed from a shaft portion 52b rotated by a motor 52a, a disc shaped blade holding portion 52c fixed to the distal end of the shaft portion 52b, and six blades 52d fixed to the outer edge portion of the blade holding portion 52c.

The bubble dividing means 52 also has the function of creating a suspension solution of water and calcium hydroxide that is difficult to dissolve in water by stirring calcium hydroxide powder added to the exhaust gas treatment tank 41.

Moreover, because the neutralization reaction shown in Formula 2 is a heat generating reaction, a cooler 53 is provided in the exhaust gas treatment tank 41 for cooling the tank temperature to below the heatproof temperature of the intake pipe 45 or the exhaust gas treatment tank 41.

The cooler 53 is formed from a beat discharge section 53b cooled by a fan 53a.

A pH sensor 55 is also provided in the exhaust gas treatment tank 41.

After the operation thereof has been halted, solid material in the exhaust gas treatment tank 41 is received together with the alkaline solution by a solid - liquid separator 62 and the solids and liquids are separated. Thereafter, the solid material is either disposed of as waste material or used in other applications.

The separated alkaline solution, however, is returned to the exhaust gas treatment tank 41 once more and either reused or discarded.

The control device 61 constantly monitors the supply pressure of the argon gas and fleon gas to the heater 18, the level of water in the water storage tank 26, the state of plasma generation, and the temperature and level of the solution inside the exhaust gas treatment tank 41 by receiving signals from various sensors such as the pressure switches 23 and 33, thermocouples 36 and 54, level switches 27 and 56, and the optical sensor 17. When one of these strays from the prescribed value, a concern arises that the operation is not being performed normally or efficiently and the operation is halted.

After the operation has been halted, air is supplied as described above in order to guarantee stability and the remaining gas within the apparatus is scavenged.

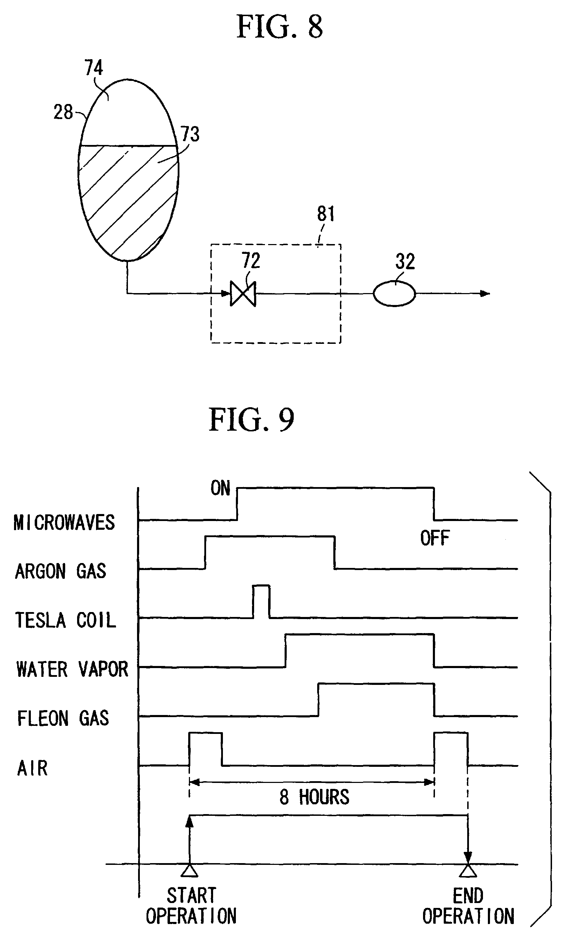

The operation of the decomposition apparatus according to the present embodiment will now be described with reference to Fig. 9.

In this decomposition apparatus, firstly, the electromagnetic valves 19a and 19b are closed and the electromagnetic valve 19c is opened, thereby supplying air from the air compressor 24 to the electric discharge pipe 5 via the gas supply pipe 16.

Because this air is heated to between 100 and 180°C by passing through the heater 18, the remaining moisture inside the apparatus can be definitely removed.

Next, the electromagnetic valve 19c is closed and the electromagnetic valve 19a is opened, thereby supplying argon gas to the electric discharge pipe 5.

At this time, because the argon gas is supplied from a direction tangential to the outer pipe 12 and flows down in a spiral configuration, sediment is formed in the vicinity of the distal end of the inner pipe 11 enabling the plasma to be easily held.

Moreover, the gas supply at this time is set at 4 to 40 l/min and more desirably to 15 l/min or more.

Within this setting range, the sediment is effectively formed and the plasma is able to be held more easily. In addition, the electric discharge pipe 5 tends not to be thermally affected by the plasma and melting deformation and damage thereto can be effectively prevented.

Moreover, at fixed intervals after the start of the argon gas supply microwaves are transmitted from the microwave transmitter 2.

The microwaves are transmitted by the square wave guide 1 towards the rear end side thereof and then transmitted further towards the circular cylinder wave guide 7.

At this time, a $TM_{01}$ mode having a high strength electrical field is formed as the electric field inside the circular cylinder wave guide 7. Moreover, because the electric field mode inside the square wave guide 1 and the electric field mode inside the circular cylinder wave guide 7 are coupled by the inner conductor 9, the electric field inside the circular cylinder wave guide 7 is stabilized.

Next, a high voltage is applied to the distal end of the connected wires 14 by the ignition device 13, and an electric spark discharge is generated between the electrode 13 and the inner conductor 9 and ignition takes place.

At this time, because moisture inside the electric discharge pipe 5 is removed by air and easily ignitable argon gas is supplied thereto in advance, the ignition is simplified.

Next, water is pumped out from the water storage tank 26 by the plunger pump 25 and the water vapor generated by passing this through the heater 18 is supplied to the electric discharge pipe 5.

Next, the electromagnetic valve 19b is opened and fleon gas is supplied to the electric discharge pipe 5.

At this time, oil elements and moisture in the fleon gas discharged from the recovered fleon cylinder 28 are removed when the gas passes through the mist separator 32.

As a result, the generation of byproducts and contamination of the pipes and the like caused by lubricating oil in the fleon gas is suppressed, and the efficient and stable supply of fleon gas and the like is made possible. Moreover, the supply of excess moisture can be prevented and there is no plasma loss.

Accordingly, the plasma can be stabilized and it is possible to obtain an improvement in the treatment performance.

The mixing of the water vapor, argon gas, and fleon gas that have passed through the heater 18 and been fed into the mixer 37 is accelerated not only by the loss in pressure when they pass through the aperture 38a of an orifice 38, but is also accelerated when they strike the end surface 37A on the exit side. Therefore, they leave the mixer 37 in a more uniformly mixed state and are thus supplied to the electric discharge pipe 5.

As a result, there is sufficient decomposition reaction according to Formula 1 and it is possible to suppress the generation of byproducts such as chlorine gas and carbon monoxide.

When the microwaves are irradiated onto the fleon gas supplied thus to the electric discharge pipe 5, the level of electronic energy in the electric discharge pipe 5 is high and thermal plasma heated to a temperature of 2000K to 6000K is generated.

At this time, because argon gas is supplied to the electric discharge pipe 5 at the same time as the fleon gas and the water vapor, there is no plasma loss.

Moreover, because the fleon gas is placed in a state in which it can be easily separated into chlorine atoms, fluorine atoms, and hydrogen atoms by the thermal plasma generation, it is easily decomposed by reacting with the water vapor, as is shown in Formula 1.

When the plasma is stable the electromagnetic valve 19a is closed and the supply of argon gas is halted.

The gas generated by the decomposition reaction is discharged into the alkaline solution in the exhaust gas treatment tank 41 via the exchange coupling 44 and the intake pipe 45.

However, because these generated gases are at extremely high temperature, they are firstly cooled to a approximately 400°C by the cooler 46 provided at the reaction pipe 15 before they pass into the intake pipe 45.

At this temperature, because there is no recondensation of the water vapor remaining inside the reaction pipe 15, the reaction pipe 15 is held in a dry state and there is no plasma loss.

On the other hand, the cooling water of the cooler 46 that has been heated to approximately 50°C by cooling the reaction pipe 15 is fed to the heater 47 provided in the recovered fleon cylinder 28 where it prevents mist from being generated in the cylinder 28 and the pipes downstream thereof when the liquid fleon gas inside the recovered fleon cylinder 28 is vaporized, and suppresses pressure variations due to temperature reductions.

The cooling water from which the heat has been taken by the above action can be reused as cooling water in the cooler 46 enabling the amount of water consumed to be kept extremely low.

The generated gas that is discharged as bubbles from the distal end of the intake pipe 45 is divided into even smaller bubbles by the action of the blades 52d of the bubble dividing means 52. Therefore, the surface area thereof that comes into contact with the alkaline solution is increased and the time taken until the gas reaches the solution of the surface is lengthened. As a result, the neutralization reaction is accelerated.

A portion of the neutral products created by the neutralization reaction remain in the alkaline solution as solid material, however, after the decomposition operation has been halted, this solid material is fed into the solid - liquid separator 62 together with the alkaline solution and the solids and liquid are separated.

Next, variant example 1 of the first embodiment of the present invention will be described with reference to the drawings.

Fig. 7 shows the essential portions of the system structure of the decomposition apparatus according to the present embodiment. In this diagram, the same structural elements as in the above first embodiment are given the same descriptive symbols and a description thereof is omitted.

The symbol 71 denotes a temperature adjustment tank (a temperature adjustment device). The recovered fleon cylinder 28 is immersed into the warm water contained in this temperature adjustment tank 71.

The temperature adjustment tank 71 is provided to stabilize the volume flow rate of the fleon gas passing through a restricting apparatus 72 by holding the pressure of the saturated vapor inside the recovered fleon cylinder 28 constant.

Namely, provided the recovered fleon inside the recovered fleon cylinder 28 exists in a liquid state, the recovered fleon exists in a two phase state of separation including saturated liquid 73 and saturated vapor 74, and the pressure and temperature of the saturated vapor 74 is determined by the type of the recovered fleon. Consequently, if the temperature of the saturated vapor 74 is controlled, it is possible to keep the pressure thereof constant.

Therefore, in the present embodiment, it is possible to provide a heating means (not illustrated) such as a heater or the like in the temperature adjustment tank 71 and keep the temperature of the saturated vapor 74 substantially constant.

If consideration is given to temperature reduction caused by adiabatic expansion when the saturated vapor 74 passes through the restricting apparatus 72, it is preferable if the temperature of the saturated vapor 74 to be held constant is set slightly higher.

The symbol 75 denotes a heater for preventing pressure variations caused by this temperature reduction.

Furthermore, in the present embodiment, by heating the recovered fleon gas cylinder 28 using the temperature adjustment tank 71, naturally it is possible to avoid generating mist when the saturated solution 73 is vaporized and, in addition, because the pressure of the saturated vapor 74 inside the recovered fleon cylinder 28 is kept substantially constant, the volume flow rate towards the heater 18 is stabilized.

As a result, the plasma is stable for a long period of time and it is possible to guarantee the desired decomposition treatment performance.

Next, another variant example, 2, of the first embodiment of the present invention will be described with reference to the drawings.

Because the schematic structure of this decomposition apparatus is substantially the same as that according to variant example 1 of the first embodiment, it will be described below with reference made to Fig. 7.

The temperature and pressure Ps of the saturated vapor 74 inside the recovered fleon cylinder 28 is determined by the type of the recovered fleon, as was described above, however, when the pressure Ps and the temperature have been determined, all of the quantities of states of the specific volumes and the like in each state including the saturated solution 73, the saturated vapor 74, the wet vapor, the heated vapor, and the like are determined.

Then, from the size relationship between the critical pressure Psc determined from Formula 3 using the above quantities of state and the pressure Ps of the saturated vapor 74, the volume flow rate Q of the fleon gas flowing out from the recovered fleon cylinder 28 and passing through the restricting apparatus 72 is associated in the manner shown in Formula 4.

The symbol p in these formulas denotes the pressure downstream from the restricting apparatus 72 and the value thereof is substantially the value of the atmospheric pressure and is constant.

(Formula 3)

If the pressure ratio $\phi$ = Ps/p and the gas adiabatic exponent is k, the critical pressure Psc is found by

$$Psc/p = \left(\frac{2}{k+1}\right)^{\frac{k}{k+1}}$$

(Formula 4)

when Ps $\leqq$ Psc (referred to below as state a), then

$$Q \infty A * (\Delta p)^{1/2}$$

when Ps > Psc (referred to below as state b), then

$$Q \infty A$$

wherein $\Delta p$ = Ps-p and A is the crosssectional area of the aperture of the restricting apparatus 72.

As is clear from Formula 4, for a large portion of the decomposition operation, the amount of gas is sufficient and meets the conditions for state b. As a result, the volume flow rate Q in this state is determined only by the aperture cross sectional area A.

If, however, the gas amount decreases and the pressure Ps falls below a predetermined value, the state changes to state a and, therefore, the volume flow rate Q is determined by the aperture cross sectional area A and the differential pressure $\Delta p$.

Further, in the decomposition apparatus of the present embodiment, by changing the aperture cross sectional area A in accordance with the relationship between the pressure Ps of the saturated vapor 74 and the critical pressure Psc, it is possible to stabilize the volume flow rate Q of the fleon gas passing through the restricting apparatus 72, and it is also possible to obtain the desired decomposition treatment performance in the same way as in variant example 1 in the first embodiment.

Moreover, by controlling the temperature of the saturated vapor 73, it is possible to selectively control the volume flow rate Q under the conditions of either state a or state b. Therefore, it is also possible to choose the precision of the control.

Next, another variant example, 3, of the first embodiment of the present invention will be described.

Because the schematic structure of this decomposition apparatus is substantially the same as that according to variant example 1 of the first embodiment, it will be described below with reference made to Fig. 7.

This decomposition apparatus obtains stabilization of the volume flow rate Q flowing out from the restricting apparatus 72 by controlling the differential pressure $\Delta p$ (= P1 - p) at the restricting apparatus 72, namely, the entry pressure P1 of the restricting apparatus 72.

Here, in state b, because the volume flow rate Q is determined only by the aperture cross sectional area A, as was stated above, there is no reason to control the entry pressure P1.

In contrast, in state a, because the volume flow rate Q is determined by the aperture cross sectional area A and the differential pressure $\Delta p$, by making the differential pressure $\Delta p$ constant, it is possible to make the volume flow rate Q constant.

Because of this, in this decomposition apparatus, a pressure control valve (not illustrated) is placed between the recovered fleon cylinder 28 and the restricting apparatus 72, and the restricting apparatus 72 is formed from an orifice, a capillary pipe, and a differential pressure control valve.

This pressure control valve is used to adjust the exit pressure to the set value and a known constant pressure expansion valve is employed therefor.

Further, in the decomposition apparatus of the present embodiment, because the pressure Ps is kept at the desired entry pressure P1 by a pressure control valve in state a, it is possible to stabilize the volume flow rate Q of the fleon gas passing through the restricting apparatus 72, and it is also possible to obtain the desired decomposition treatment performance in the same way as in variant examples 1 and 2.

Next, yet another variant example, 4, of the first embodiment of the present invention will be described with reference to the drawings.

Fig. 8 is a view showing the principal portions of the system structure of a decomposition apparatus according to the present embodiment. In this diagram, the same structural elements as in the above first embodiment and the variant example 1 thereof are given the same descriptive symbols and a description thereof is omitted.

This decomposition apparatus inverts the recovered fleon cylinder 28 causing saturated solution 73 to flow out from the cylinder 28. A heating apparatus 81 is provided so as to cover the restricting apparatus 72 and the pipes downstream thereof.

In this structure, because there is no critical pressure Psc, as there is in the above embodiment, the volume flow rate Q passing through the restricting apparatus 72 is determined by the aperture cross sectional area A and the differential pressure $\Delta p$.

Accordingly, by controlling the saturation temperature using the heating apparatus 81 so that the differential pressure $\Delta p$ is kept constant until the saturated solution 73 is almost completely gone, it is possible to stabilize the volume flow rate Q of the fleon gas passing through the restricting apparatus 72, and it is also possible to obtain the desired decomposition treatment performance in the same way as in variant examples 1 to 3.

At this time, because the amount of heat taken from the surrounding area when the saturated solution 73 is vaporized is far greater than the amount of heat taken during the adiabatic expansion by the restricting apparatus 72, it is preferable that the saturated vapor 74 is heated by the heating apparatus 81 so as to become superheated vapor at the entrance of the mist separator 32.

Note that the decomposition apparatus for organic halogen compounds according to the present invention is not limited to the above embodiments and may include the embodiments described below.

(1) Instead of the orifice 38 it is also possible to fill the mixer 37 with beads or the like as a means for accelerating the mixing inside the mixer 37.

In this structure, the mixing is accelerated because the fleon gas and the like and the water vapor circulate at random through the gaps formed in the mixer 37.

(2) It is also possible to place a plurality of baffle plates at intervals on the inner peripheral surface of the mixer 37, for example, alternating in the vertical and horizontal directions (i.e. a static mixer).

In this structure, because the fleon gas and the like and the water vapor are circulated in a zigzag fashion, the mixing is accelerated.

(3) It is also possible to place the piping that is connected to the entry side of the mixer 37 at an inclination relative to the flow direction, and to provide a spirally extending guide plate at the inner peripheral surface of the mixer 37 (i.e. a swirl mixer).

In this structure, because the fleon gas and the like and the water vapor are circulated in a spiral fashion, the mixing is accelerated.

(4) Instead of placing the distal end of the Tesla coil 14 inside the electric discharge pipe 5, it is also possible to place it outside the electric discharge pipe 5 and to achieve ignition by spark discharge.

(5) Instead of using the cooling water used to cool the reaction pipe 15 to heat the recovered fleon cylinder 28, it is possible to use the cooling water from the cooler 53 used for the slurry cooling in the exhaust gas treatment tank 41.

(6) As described above, the distance that the distal end of the inner pipe 11 is from the distal end of the probe antenna 9a inside the outer pipe 12 is optimally set to the same distance as the distal end of the probe antenna 9a is from the portion where the microwave energy converges, provided that the outer pipe 12 is not melted, however, it is also possible to alter this considering the melting of the outer pipe 12.

(7) The neutral solution stored in the exhaust gas treatment tank 41 is not limited to the above alkaline suspension solution and it is also possible to use an aqueous alkaline solution such as a sodium hydroxide aqueous solution or the like.

(8) The mist separator 32 is not limited to the placement shown in each of the drawings, and may be placed in an optional position provided that it is on the route from the recovered fleon cylinder 28 to the gas supply pipe 16.

(Second Embodiment)

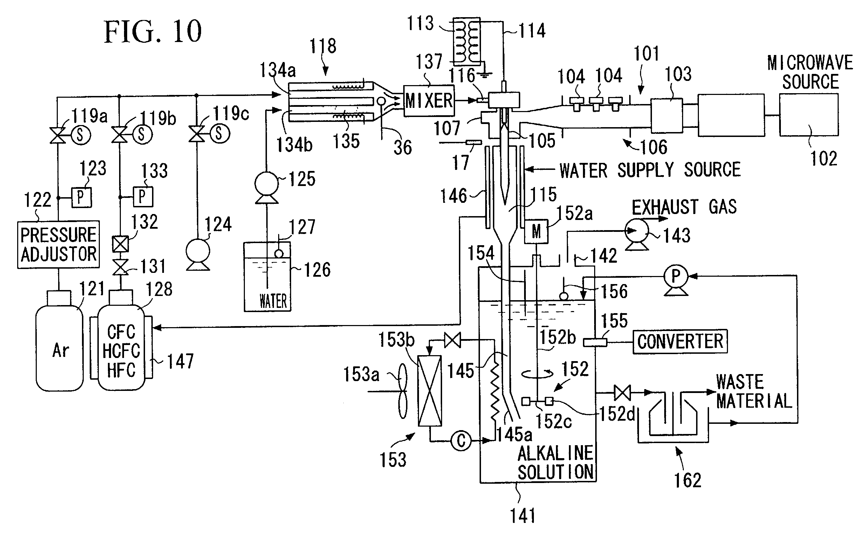

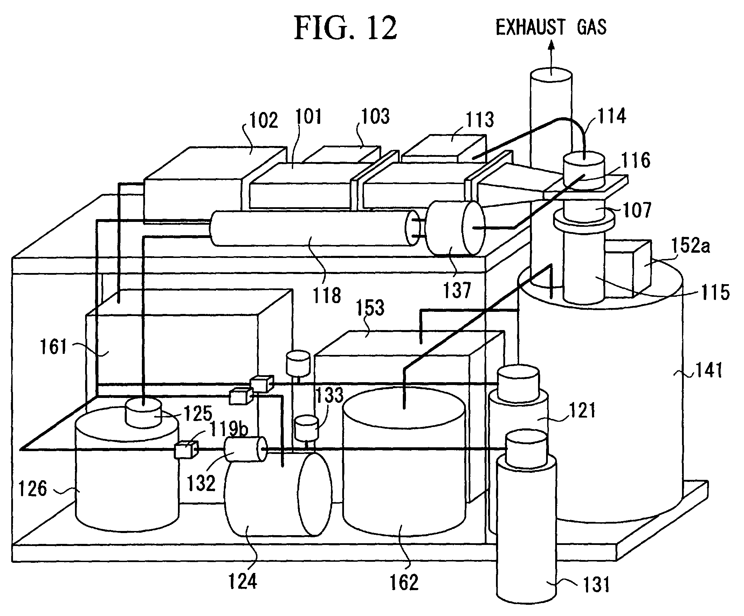

The second embodiment of the present invention will now be described with reference to Figs. 10 through 15. The square wave guide 101 extending in the horizontal direction in Fig. 12 is provided with a microwave transmitter 102 at the starting end portion thereof (i.e. the left hand side in the drawing) for transmitting microwaves at a frequency of 2.45 GHz and sending these microwaves from the starting end side towards the terminal end side (i.e. towards the right hand side of the drawing).

As is shown in Fig. 10, the square wave guide 101 is provided with an isolator 103 for preventing reflected microwaves that are reflected by the terminal end side so as to end up coming back towards the starting end side from affecting the transmitting side by absorbing these microwaves. The square wave guide 101 is also provided with a tuner 106 which causes each of a plurality of wave motion adjusting members 104 to be inserted or retracted so as to adjust the amount of inconsistency in the wave motion and thereby converge the electric waves at the electric discharge pipe 105.

This operation is described below in more detail.

The microwave transmitter 102 drives a magnetron placed at one end of a wave guide pipe having a rectangular cross section so as to radiate electromagnetic waves in a predetermined frequency. The characteristics of the propagation phenomenon of these electromagnetic waves could be ascertained by solving Maxwell's wave motion equation for electromagnetic waves, however, the end result is that the waves are propagated as electromagnetic TE waves that have no electric field component in the propagation direction.

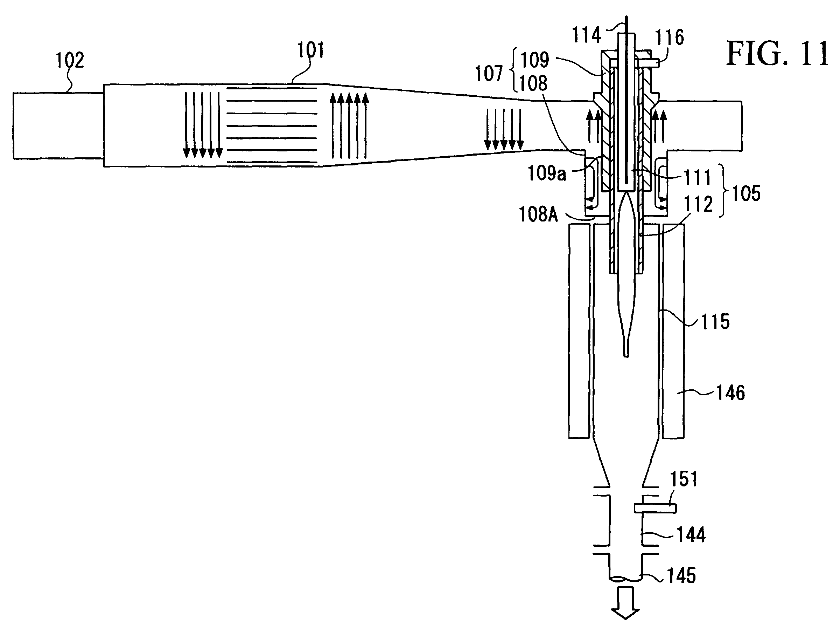

An example of these primary components $TE_{10}$ is shown by the propagation directions in the rectangular wave guide pipe in Fig. 11 by the orthogonally intersecting arrows.

Moreover, TM waves having electric field components in the direction of movement are generated in the annular cavity portion of a double circular cylinder wave guide pipe including a double circular cylinder conductor at the other end portion of the rectangular wave guide pipe 101 by the bonding action of the electromagnetic waves propagated in the wave guide pipe 101 with the electromagnetic waves reflected by the end of the pipe caused by the conductor 109.

The $TM_{01}$ waves that form this primary component are shown by the arrows in the annular cavity portion in Fig. 11.

Delicate adjustment of the propagation of the wave motion of the electromagnetic waves arising from secondary and greater higher harmonics is made by the tuner 104.

The isolator 103 protects the transmitter 102 from basic damage.

In this way, a stable mode $TM_{01}$ electric field is formed inside the circular cylinder wave guide pipe 107.

Naturally, a magnetic field is generated in a direction orthogonally intersection the electric field.

Because substances inserted into the relevant portion by the vibrating electromagnetic field are heated to a plasma state, if a high voltage is applied to electrodes 113 connected to the ignition device 113, an electric spark discharge is generated between the electrode 113 and an inner conductor109 and ignition takes place.

As is shown in Fig. 11, the circular cylinder wave guide pipe 107 is formed from an outer conductor 108 and an inner conductor 109 having a smaller diameter than the outer conductor 108. The circular cylinder wave guide pipe 107 is connected to the vicinity of the terminal end portion of the square wave guide pipe 101 so as to extend in a vertical direction while communicating with the square wave guide pipe 101.

The inner conductor 109 is fixed to the top portion of the square wave guide pipe 101 and extends towards an end plate 108A of the outer conductor 108 while surrounding a quartz electric discharge pipe 105. This extended portion forms a probe antenna 109a.

The electric discharge pipe 105 is formed from an inner pipe 111 and an outer pipe 112 and is placed so as to be coaxial with the central axis of the circular cylinder wave guide pipe 107.

Moreover, a Tesla coil 114 for generating heat using the ignition device 113 is inserted inside the inner pipe 111 of the electric discharge pipe 105.

The distal end (the bottom end) of the inner pipe 111 is placed exactly a predetermined distance from the distal end of the probe antenna 109a on the inner side of the distal end of the outer pipe 112.

This distance is set to be the same as the distance as, for example, the distal end of the probe antenna 109a and the convergence portion where the energy from the microwaves converges.

The distal end portion of the outer pipe 112 communicates with a copper reaction pipe 115 through the end plate 108A of an outer conductor 108. The proximal end (i.e. the top end in the drawing) of the outer pipe 112 is mounted with a gap between itself and the inner conductor 109.

The symbol 117 denotes an optical sensor facing towards the outer pipe 112 that is exposed between the end plate 108A of the outer conductor 108 and the reaction pipe 115.

This optical sensor 117 monitors the state of plasma generation by detecting the luminosity.

A gas supply pipe 116 is inserted into the above gap at a tangential direction to the outer pipe 112. Argon gas, fleon gas (organic halogen compounds), air, and water vapor are supplied to the electric discharge pipe 105 via the gas supply pipe 116.

The argon gas, fleon gas, and air are selectively fed to the heater 118 from their respective supply sources by the opening and closing of the electromagnetic valves 119a, 119b, and 119c shown in Fig. 10.

Because the argon gas is supplied in order to facilitate the ignition prior to the plasma generation, it is stored in an argon cylinder 121.

A pressure adjustor 122 and a pressure switch 123 are provided between the argon cylinder 121 and the electromagnetic valve 119a.

Air is supplied from an air compressor 124 in order to increase the stability of the ignition by removing moisture remaining in the system and in order to expel gas remaining in the system. Atmospheric air, nitrogen gas, argon gas, and the like may be used for this air.

Because water vapor is necessary for the decomposition of the fleon gas, it is generated by feeding water from a water storage tank 126 using a plunger pump 125 to the heater 118.

A level switch 127 is provided in the water storage tank 126 for detecting variations in the water level.

The fleon gas is wet stored in a recovered fleon cylinder 128. A restricting apparatus 131, a mist separator 132, and a pressure switch 133 are provided between the recovered fleon cylinder 128 and an electromagnetic valve 119b.

The restricting apparatus 131 is provided in order to obtain a constant flow rate and may be formed from a capillary pipe and orifice combination, for example.

The mist separator 132 is intended to remove oil elements (lubricating oil), moisture, as well as solid elements such as sludge that are contained in the fleon gas, and an impact type or filter type separator is used.

The heater 118 not only generates water vapor for reacting with the fleon gas, but is also intended to prevent trouble, such as water vapor inside the apparatus being cooled by the fleon gas and the like and recondensing, by heating the fleon gas and the like in advance. An electric type or steam type of heating method is employed in the heater 118.

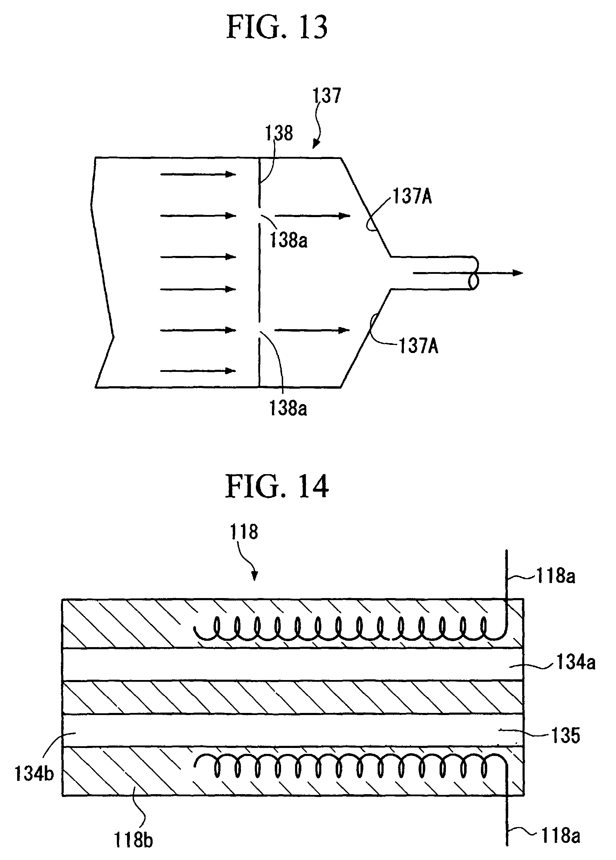

As is shown in Fig. 14, the heater body 118a is formed by casting a heat generating coil 118b, for example, (or a steam pipe or the like) in molten aluminum. Two parallel flow passages 134a and 134b are formed inside the heater body 118a.

Fleon gas, argon gas, and air are circulated through one flow passage (the second flow passage) 134a, while water from a water storage tank 126 (the water supply source) is circulated through the other flow passage 134b.

A filling material 135, which blocks the flow passage 134b while leaving a gap running from the entry side to the exit side thereof, is provided in the flow passage 134b.

An organic or inorganic granulated member, a fibrous member, a porous member, or the materials that form these may be employed for the filling material 135, however, from the viewpoint of preventing deterioration under high temperature, it is preferable that the material be an inorganic material such as oxides, carbides, nitrides, and the like typified by $SiO_2$, $Al_2O_3$, $TiO_2$, MgO, $ZrO_2$, and the like.

Note that a thermocouple 136 is provided in the vicinity of the exit of the heater 118.

Fleon gas and the like and water vapor that have transited the heater 118 are mixed together in a mixer 137 and thereafter supplied to electric discharge pipe 115 via the gas supply pipe 116.

As is shown in Fig. 13, an orifice 138 is provided inside the mixer 137. The aperture 138a of the orifice 138 is set to between $\phi$ 0.1 to 5mm.

The exit end surface 137A of the mixer 137 that is faced by the aperture 138a forms an inclined face with the cross section of the flow passage becoming gradually smaller.

An exhaust gas treatment tank 141 is provided in order to render harmless acidic gas (hydrogen fluoride and hydrogen chloride) generated when the fleon gas is decomposed by neutralizing it. An alkaline suspension solution including water to which calcium hydroxide has been added is contained in the exhaust treatment tank 141.

For example, if the fleon gas to be decomposed is fleon R12 for use as a refrigerant that has been recovered from discarded refrigerators, the gas generated by the decomposition reaction shown in Formula 5 can be rendered harmless by the neutralization reaction shown in Formula 6.

(Formula 5)

$$CCl_2F_2 + 2H_2O \rightarrow 2HCl + 2HF + CO_2$$

(Formula 6)

$$2HCl + Ca(OH)_2 \rightarrow CaCl_2 + 2H_2O$$

$$2HF + Ca(OH)_2 \rightarrow CaF_2 + 2H_2O$$

Because the solubility of the neutralized product (i.e. the calcium chloride and the calcium fluoride) created in the neutralization reaction shown in Formula 6 is low, a portion thereof dissolves in the alkaline solution, however, the majority thereof exists as slurry.

Moreover, the carbon dioxide generated in the decomposition reaction in Formula 5 and the acidic gas that has been reduced by the neutralization reaction in Forumula 6 to slightly below a discharge reference value are discharged to the outside by a blower 143 from a discharge duct 142 connected to the top of the exhaust gas treatment tank 141.

An intake pipe 145 connected to the reaction pipe 115 via an exchange coupling 144 is placed inside the exhaust gas treatment tank 141 so as to extend in a vertical direction with the bottom end portion thereof immersed in the alkali solution.

The distal end 145a of the intake pipe 145 is formed so as to be slanted at a predetermined angle relative to the vertical direction.

A cooler 146 provided with cold water pipes (not illustrated) is provided at the periphery of the reaction pipe 115.

The cooler 146 is provided to cool the gas generated by the decomposition reaction shown in Formula 5, however, it is controlled so that it only cools to above the dew point so as to prevent recondensation of the water vapor remaining inside the reaction pipe 115.

In the present embodiment, the gas is cooled to approximately 400°.

Effective use is made of the cooling water in the cooler 146 that has been warmed up from cooling the reaction pipe 115 (i.e. the warm water) by using it as a source of heat for heating the recovered fleon gas cylinder 128.

Namely, a heater 147 provided with warm water pipes (not illustrated) is provided at the periphery of the recovered fleon cylinder 128, and the recovered fleon cylinder 128 is heated by allowing cooling water that has been used to cool the reaction pipe 115 to circulate through the warm water pipes.

As is shown in Fig. 11, the exchange coupling 144 is able to be connected and disconnected between the reaction pipe 115 and the intake pipe 145 and a water injection nozzle 151 communicates with the interior of the exchange coupling 144.

Cooling water is sprayed from the water injection nozzle 151 so that the intake pipe 145 made from a resin, for example, Teflon is rapidly cooled to within a heatproof temperature range.

It should be noted that, if the intake pipe 145 is a Teflon pipe, it is cooled to 100°C or less.

The reason why the intake pipe 145 is made from resin is because the intake pipe 145 needs to have sufficient corrosion resistance to both the acidic solution formed when the acidic gas is dissolved in the cooling water and to the alkaline solution contained inside the exhaust gas treatment tank 141, and this is difficult to achieve with a metallic material.

In contrast, in the case of the reaction pipe 115, while the interior thereof is always in a dry state and thus has little likelihood of being corroded, it does need to have heat resistance. Therefore, by forming it from copper, it can be given a lengthy life span.

Gas generated by the decomposition reaction shown in Formula 5 is bubbled through the alkaline solution from the distal end (bottom end) of the intake pipe 145 and then discharged.

Because the neutralizing reaction in the alkaline solution is accelerated the greater the area of contact between the gas bubbles and the alkaline solution and the longer the time before the gas bubbles reach the surface of the solution, a bubble dividing means 152 is provided in the exhaust gas treatment tank 141 for accelerating the neutralization reaction shown in Formula 6 by dividing the gas bubbles into even smaller bubbles.

The bubble dividing means 152 is formed from a shaft portion 152b rotated by a motor 152a, a disc shaped blade holding portion 152c fixed to the distal end of the shaft portion 152b, and six blades 152d fixed to the outer edge portion of the blade holding portion 152c.

The shaft portion 152b, the blade holding portion 152c, and the blades 152d are all made from SUS material. The blades 152d intersect the blade holding portion 152c and are fixed by silver solder thereto at equal intervals in the peripheral direction.

The reason for fixing the blades by silver solder in this way is because general welds are extremely susceptible to corrosion in the alkaline solution.

The bubble dividing means 152 are provided such that the center of the blade holding portion 152c is positioned above the distal end of the reaction pipe 115. The bubbles that float up from the distal end of the reaction pipe 115 strike the blades 152d which are rotating at 300 rpm and are divided further into bubbles having a diameter of between about 3 to 5 mm.

The bubble dividing means 152 also fulfills the function of creating a suspension solution of water and calcium hydroxide that does not dissolve in water by stirring in calcium hydroxide powder added to the exhaust gas treatment tank 141.

Moreover, because the neutralization reaction shown in Formula 6 is a heat generating reaction, a cooler 153 is provided in the exhaust gas treatment tank 141 for cooling the tank internal temperature to below the heatproof temperature of the intake pipe 145.

In the cooler 153, a portion of the piping connected to a heat discharge section 153b, which is cooled by a fan 153a, is inserted into the exhaust gas treatment tank 141 and heat is removed by circulating a cooling medium such as water or the like through this piping and is then discharged in the heat discharge section 153b.

The temperature inside the tank is detected by a thermocouple 154.

Moreover, a pH sensor 155 is also provided in the exhaust gas treatment tank 141.

The pH value of the alkaline solution is constantly monitored by a control device 161 via the pH sensor 155 and when the pH value reaches 9 (after starting at between 11 and 12), for example, a warning means is operated upon an instruction from the control device 161 and the decomposition operation is halted.

Any warning means may be employed provided that it can summon the attention of those nearby and a means may be employed that flashes a lamp on and off, for example, or sounds a warning siren.

Because the slurry inside the exhaust gas treatment tank 141 gradually increases as the operating time becomes longer, after the operation thereof has been baited, the slurry is received together with the alkaline solution by a solid - liquid separator 162 and the solids and liquids are separated. Thereafter, the slurry is either disposed of as waste material or used in other applications.

The separated alkaline solution, however, is returned to the exhaust gas treatment tank 141 once more and is reused.

Note that any variations in the level of the solution in the exhaust gas treatment tank are detected by the level switch 156.

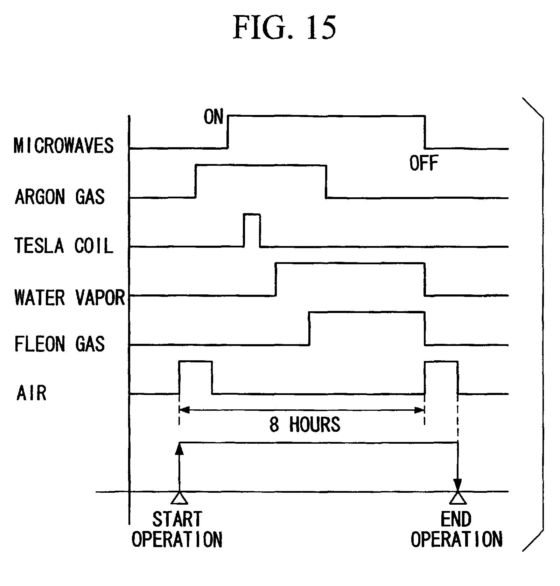

In a decomposition apparatus for an organic halogen compound having the above structure, the electromagnetic valve opening and closing operations and the Tesla coil 114 ignition operations are controlled by the control device 161 as is shown in Fig. 15.

As is clear from this diagram, in this decomposition apparatus, fleon gas is decomposed by batch treatment in 8-hour cycles.

Namely, before the fleon gas and water vapor are supplied, firstly air is supplied for a predetermined time (3 minutes) in order to remove remaining moisture. After the air supply has been stopped, the supply of argon gas is started in order to improve the ignition stability.

While the argon gas is being supplied, microwaves are transmitted and ignition is carried out using the Tesla coil. At the same time, water vapor and fleon gas are supplied and, thereafter, the supply of the argon gas is halted.

After the decomposition operation has been halted, air is supplied to the reaction pipe 115 for a predetermined time (5 minutes) in order to ensure stability and the residual acidic gas is purged.

The air used to purge the gas is supplied from the air compressor 124 via the gas supply pipe 116 with the electromagnetic valves 119a and 119b closed and the electromagnetic valve 119c opened.

In the above steps, there are times when the supply of the argon gas and the supply of the fleon gas overlap, however, these times from the starting of the supply of the fleon gas to the halting of the supply of the argon gas are extremely short and therefore pose no problems.

The reason for this is that, as long as the ignition state has been made stable, there is no longer any need to keep supplying the argon gas, and also from the standpoint of lowering costs, there is a need to keep the amount of argon consumption low.

Moreover, the control device 161 is constantly monitoring the supply pressure of the argon gas and fleon gas to the heater 118, the level of water in the water storage tank 126, the state of plasma generation, and the temperature and level of the solution inside the exhaust gas treatment tank 141 by receiving signals from various sensors such as the pressure switches 123 and 133, thermocouples 136 and 154, level switches 127 and 156, and the optical sensor 117. When one of these strays from the prescribed value, a concern arises that the operation is not being performed normally or efficiently and the operation is halted.

After the operation has been halted, air is supplied as described above in order to guarantee stability and the remaining gas within the apparatus is scavenged.

The operation of the decomposition apparatus of the present embodiment will now be described.

In this decomposition apparatus, firstly, the electromagnetic valves 119a and 119b are closed and the electromagnetic valve 119c is opened, thereby supplying air for three minutes from the air compressor 124 to the electric discharge pipe 105 via the gas supply pipe 116.

Because this air is heated to between 100 and 180°C by passing through the heater 118, the remaining moisture inside the apparatus can be definitely removed.

Next, the electromagnetic valve 119c is closed and the electromagnetic valve 119a is opened, thereby supplying argon gas to the electric discharge pipe 105.

At this time, because the argon gas is supplied from a direction tangential to the outer pipe 112 and flows down in a spiral configuration, sediment is formed in the vicinity of the distal end of the inner pipe 111 enabling the plasma to be easily held.

Moreover, the gas supply at this time is set at 4 to 40 l/min and more desirably to 15 l/min or more.

Within this setting range, the sediment is effectively formed and the plasma can be held more easily. In addition, the electric discharge pipe 105 tends not to be thermally affected by the plasma and melting deformation and damage thereto can be effectively prevented.

Moreover, at fixed intervals after the start of the argon gas supply microwaves are transmitted from the microwave transmitter 102.

The microwaves are transmitted by the square wave guide 101 towards the rear end side thereof and then transmitted further towards the circular cylinder wave guide 107.

At this time, a $TM_{01}$ mode having a high strength electrical field is formed as the electric field inside the circular cylinder wave guide 107. Moreover, because the electric field mode inside the square wave guide 101 and the electric field mode inside the circular cylinder wave guide 107 are coupled by the inner conductor 109, the electric field inside the circular cylinder wave guide 107 is stabilized.

Next, a heat is generated in the Tesla coil 114 by the ignition device 113 thereby causing ignition.

At this time, because moisture inside the electric discharge pipe 105 is removed by air and easily ignitable argon gas is supplied thereto in advance, the ignition is simplified.

Next, water is pumped out from the water storage tank 126 by the plunger pump 125 and the water vapor generated by passing this through the heater 118 is supplied to the electric discharge pipe 105.

The water allowed to flow into the heater 118 is not able to circulate smoothly through the flow passage because of the filling material 135 provided in the flow passage 134b, and also, as the water flow is divided into each of the gaps in the flow path, it is heated not only by the inner wall surface of the flow passage 134b, but also from the inner side as well.. Therefore, the water inside the heater 118 is heated uniformly and changed into water vapor as the water is in contact with the heater 118 for a sufficient length of time and a sufficient surface area of the water is in contact with the heater 118.

Moreover, because the generated water vapor is also unable to circulate smoothly through the flow passage 134b, a constant amount of water vapor is always maintained inside the heater 118.

In addition, it is possible to prevent water splashes caused by rippling and sudden boiling by using the heater 118 and to stabilize the water vapor outflow rate, and it is also possible to effectively suppress variations in the flow amount upstream of the mixer 137.

Accordingly, the decomposition reaction can be stabilized without causing any plasma loss and an improvement in the treatment performance can be achieved.

Further, by using the above inorganic material for the filling material 135 it is possible to effectively prevent any deterioration thereof at high temperatures and to continuously maintain the treatment performance for long periods of time.

Moreover, because the heater 118 and a preheating heater for the fleon gas, which is required to prevent the water vapor from recondensing, are formed integrally, it is possible to achieve effective use of the heat source and the space available.

Next, the electromagnetic valve 119b is opened and fleon gas is supplied to the electric discharge pipe 105.

At this time, oil elements and moisture in the fleon gas discharged from the recovered fleon cylinder 128 are removed when the gas passes through the mist separator 132.

As a result, the generation of byproducts and contamination of the pipes and the like caused by lubricating oil in the fleon gas is suppressed, and the efficient and stable supply of fleon gas and the like is made possible. Moreover, the supply of excess moisture can be prevented and there is no plasma loss.

Accordingly, the plasma can be stabilized and it is possible to obtain an improvement in the treatment performance.

After the water vapor, argon gas, and fleon gas that have passed through the heater 118 and been fed into the mixer 137 have struck the orifice 138, the direction of the flow thereof is changed and they become more thoroughly mixed together by colliding with each other.

Moreover, because turbulence forms downstream of the orifice 138, the fleon gas and the like that passes through the aperture 138a is also mixed up downstream of the orifice as well.

Furthermore, in the present embodiment, because the mixing of the fleon gas and the like is accelerated by colliding against the end surface 137A on the exit side, they leave the mixer 137 in a more uniformly mixed state and are thus supplied to the electric discharge pipe 105.

As a result, there is sufficient decomposition reaction according to Formula 5 and it is possible to suppress the generation of byproducts such as chlorine gas and carbon monoxide.

When microwaves are irradiated onto the fleon gas supplied thus to the electric discharge pipe 105, the level of electronic energy in the electric discharge pipe 105 is high and thermal plasma heated to a temperature of 2000K to 6000K is generated.

At this time, because argon gas is supplied to the electric discharge pipe 105 at the same time as the fleon gas and the water vapor, there is no plasma loss.

Because the distal end of the inner pipe 111 is placed exactly a predetermined distance towards the inner side than the distal end of the probe antenna 109a, it is possible to avoid the generated plasma being thermally affected and to prevent the inner pipe 111 from being damaged by melting.

As a result, there is no marked deformation of the state of the plasma and a stable decomposition reaction is made possible.

Moreover, because the fleon gas is placed in a state in which it can be easily separated into chlorine atoms, fluorine atoms, and hydrogen atoms by the thermal plasma generation, it is easily decomposed by reacting with the water vapor, as is shown in Formula 5.

When the plasma is stable the electromagnetic valve 119a is closed and the supply of argon gas is halted.

The gas generated by the decomposition reaction is discharged into the alkaline solution in the exhaust gas treatment tank 141 via the exchange coupling 144 and the intake pipe 145.

However, because these generated gases are at extremely high temperature, they are firstly cooled to a approximately 400°C by the cooler 146 provided at the reaction pipe 115 before they pass into the intake pipe 145.

At this temperature, because there is no recondensation of the water vapor remaining inside the reaction pipe 115, the reaction pipe 115 is held in a dry state and there is no plasma loss.

On the other hand, the cooling water of the cooler 146 that has been heated to approximately 50°C by cooling the reaction pipe 115 is fed to the heater 147 provided in the recovered fleon cylinder 128 where it prevents mist from being generated in the cylinder 128 and the pipes downstream thereof when the liquid fleon gas inside the recovered fleon cylinder 128 is vaporized, and suppresses pressure variations due to temperature reductions.

The cooling water from which the heat has been taken by the above action can be reused as cooling water in the cooler 146 enabling the amount of water consumed to be kept extremely low.

The generated gas that has been cooled by the cooler 146 undergoes further rapid cooling to less than approximately 100°C as it passes through an exchange coupling 144 from cooling water sprayed from a water spray nozzle 151.

As a result, it is possible to use the resin intake pipe 145 within its heat proof temperature range and it can be protected against heat damage caused by high temperatures.

At this time, because acidic liquid is created as the gas generated in the decomposition reaction of Formula 5 is dissolved in the cooling water, the exchange coupling 144 is gradually corroded and, in some cases, should be replaced depending on the extent of the corrosion.

Namely, because only the exchange coupling 144 needs to be replaced because of corrosion downstream from the reaction pipe 115, costs can be reduced and the task of replacement simplified.

The generated gas that is discharged through the intake pipe 145 into the alkaline solution is rendered harmless by the neutralization reaction in Formula 6 and discharged via the exhaust ducts 142.

Because this neutralization reaction is a heat generating reaction, the temperature of the alkaline solution is maintained at below 70°C by the cooler 153 so as to protect the intake pipe 145 from heat damage.

The generated gas that is discharged as bubbles from the distal end of the intake pipe 145 is divided into even smaller bubbles by the action of the blades 152d of the bubble dividing means 152. Therefore, the surface area thereof that comes into contact with the alkaline solution is increased and the time taken until the gas reaches the solution of the surface is lengthened. Consequently, the neutralization reaction is accelerated.

As a result, there is no discharging of an amount of acidic gas exceeding a reference value to the outside of the system caused by the neutralization reaction being insufficient.

The neutral products created by the neutralization reaction remain in the alkaline solution as slurry, however, after the decomposition operation has been halted, this slurry is fed into the solid - liquid separator together 162 with the alkaline solution and the solids and liquid are continuously separated.

Because this separated solution is returned to the exhaust gas treatment tank 141 for reuse, in the present embodiment, this coupled with the reuse of the cooling water enables the amount of water consumption to be greatly reduced.

Moreover, safety can also be increased by running the air compressor 124 after the decomposition operation has been halted in order to clean out any acidic gas still remaining in the apparatus.

Note that the decomposition apparatus for organic halogen compounds according to the present invention is not limited to the above embodiments and may include the embodiments described below.

(1) Instead of the orifice 138 it is also possible to fill the mixer 137 with beads or the like as a means for accelerating the mixing inside the mixer 137.

In this structure, the mixing is accelerated because the fleon gas and the like and the water vapor circulate at random through the gaps formed in the mixer 137.

It is also possible to place a plurality of baffle plates at intervals on the inner peripheral surface of the mixer 137, for example, alternating in the vertical and horizontal directions (i.e. a static mixer).

In this structure, because the fleon gas and the like and the water vapor are circulated in a zigzag fashion, the mixing is accelerated.

It is also possible to place the piping that is connected to the entry side of the mixer 137 at an inclination relative to the flow direction, and to provide a spirally extending guide plate at the inner peripheral surface of the mixer 137 (i.e. a swirl mixer).

In this structure, because the fleon gas and the like and the water vapor are circulated in a spiral fashion, the mixing is accelerated.

(2) Instead of pH control of the alkaline solution as a means for avoiding the discharge of acidic gas to the outside of the system caused by the neutralization reaction being insufficient, it is also possible to perform control using a motor current value.

Namely, if the number of motor revolutions decreases or stops, the bubbles being discharged from the intake pipe 145 are not being sufficiently divided and the neutralization reaction may not be being performed satisfactorily.

Therefore, if any abnormalities in the motor revolutions are detected based on the motor current value and the operation of the decomposition apparatus is halted by an instruction from the control device 161, it is possible to prevent the discharge of acidic gas to the outside of the system.

(3) Because the interior of the reaction pipe 115 is kept in a dry state, there is practically no corrosion effect caused by acidic gas generated by the decomposition reaction of Formula 5.

However, in order to improve the safety even more, it is also possible to install a simple booth enveloping the reaction pipe 115 and place an exhaust gas sensor for detecting $CO_2$ gas, CO gas

and the like between the booth and the reaction pipe 115.

In this structure, the extent of corrosion of the reaction pipe 115 can be constantly monitored by the control device 161 via these exhaust gas sensors. Therefore, even if the reaction pipe 115 corrodes and gas generated by the decomposition reaction of Formula 5 escapes from the reaction pipe 115, the operation of the decomposition apparatus can be halted by an instruction from the control device 161 and the discharge of acidic gas to the outside of the system can be prevented by suctioning the escaped gas.

In this case, the gas suction can also be performed by the blower 143 provided in the exhaust duct 142.

(4) Because the slurry inside the exhaust gas treatment tank 141 precipitates to the bottom if it is left overnight after operations have been halted, it is also possible to pump out the precipitated high concentration slurry using a pump and to dispose of this using the solid - liquid separator.

In this case, because it is possible to pump out the high concentration slurry only without it being mixed in with free alkaline, highly efficient slurry treatment is possible.

Moreover, if a granulating agent or an agglomerating agent or the like is added to the alkaline solution so as to increase the granularity of the slurry, the precipitation time can be shortened, and even more efficient slurry treatment can be performed.

(5) Instead of placing the distal end of the Tesla coil 114 inside the electric discharge pipe 105, it is also possible to place it outside the electric discharge pipe 105 and to achieve ignition by spark discharge.

(6) Instead of changing the fleon to a gas state by heating the recovered fleon cylinder 128 and then allowing this fleon gas to flow out, it is also possible to invert the recovered fleon cylinder 128 and to allow the recovered fleon to flow out in a liquid state. After the quantity of the flow has been made constant using a restricting apparatus such as a differential pressure control valve or the like, the fleon may then be heat vaporized and fed to the heater 118.

In this case, flow variations caused by temperature reductions can be suppressed by heating the restricting apparatus and the pipes.

(7) Instead of using the cooling water used to cool the reaction pipe 115 to heat the recovered fleon cylinder 128, it is possible to use the cooling water from the cooler 153 used for the slurry cooling in the exhaust gas treatment tank 141.

(8) As described above, the distance that the distal end of the inner pipe 111 is from the distal end of the probe antenna 109a inside the outer pipe 112 is optimally set to the same distance as the distal end of the probe antenna 109a is from the portion where the microwave energy converges, provided that the outer pipe 112 is not melted, however, it is also possible to alter this considering the melting of the outer pipe 112.

(9) The bubble dividing means 152 may also be a screw type apparatus in which a propeller is fixed to the distal end of a shaft portion.

Further, each structural element 152b, 152c, and 152d of the bubble dividing means 152 may be made from a resin such as Teflon, and the bubble dividing means may be formed by joining these together using nuts and bolts.

In this structure, because not only are there no welded portions, but each structural element 152b, 152c, and 152d is formed from resin, this apparatus has extremely good corrosion resistance.

(10) Instead of placing the distal end portion of the intake pipe 145 at an inclined predetermined angle relative to the vertical direction, it may be formed substantially in a U shape.

(11) The neutral solution stored in the exhaust gas treatment tank 141 is not limited to the above alkaline suspension solution and it is also possible to use an aqueous alkaline solution such as a sodium hydroxide aqueous solution or the like.

(Third Embodiment)

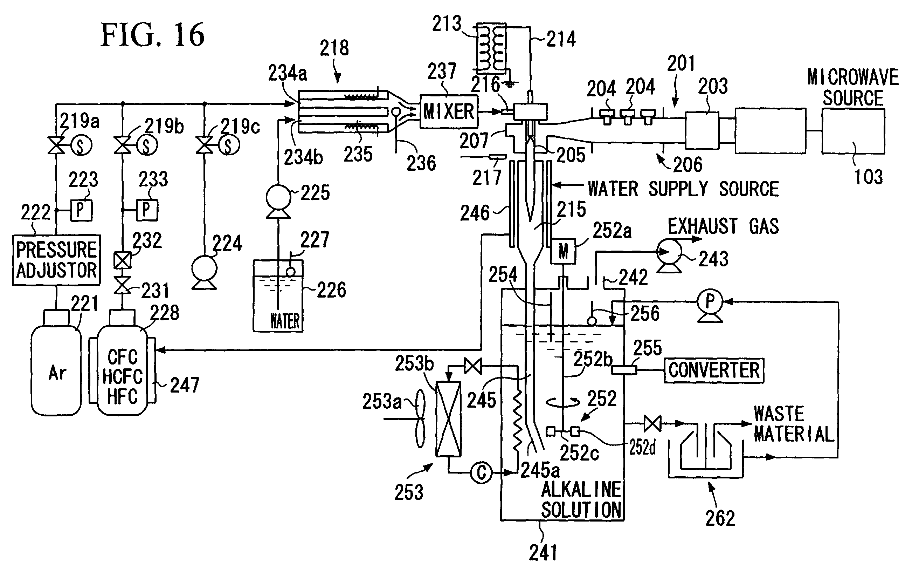

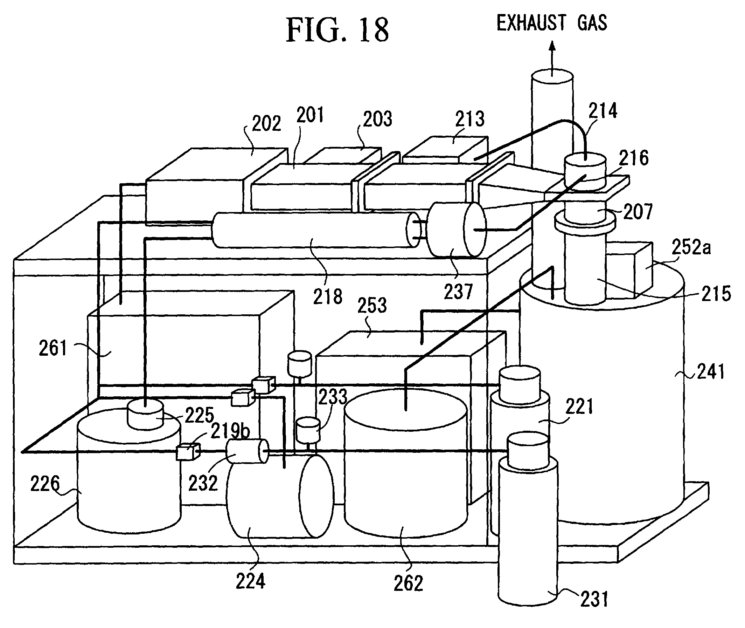

The third embodiment of the present invention will now be described with reference to Figs. 16 to 20. A square wave guide 201 extending in the horizontal direction in Fig. 18 is provided with a microwave transmitter 202 at the starting end portion thereof (i.e. the left hand side in the drawing) for transmitting microwaves at a frequency of 2.45 GHz and sending these microwaves from the starting end side towards the terminal end side (i.e. towards the right hand side of the drawing).

As is shown in Fig. 16, the square wave guide 201 is provided with an isolator 203 for preventing reflected microwaves that are reflected by the terminal end side so as to end up coming back towards the starting end side from affecting the transmitting side by absorbing these microwaves. The square wave guide 201 is also provided with a tuner 206 which causes each of a plurality of wave motion adjusting members 204 to be inserted or retracted so as to adjust the amount of inconsistency in the wave motion and thereby converge the electric waves at the electric discharge pipe 205.

This operation is described below in more detail.

The microwave transmitter 202 drives a magnetron placed at one end of a wave guide pipe having a rectangular cross section so as to radiate electromagnetic waves in a predetermined frequency.

The characteristics of the propagation phenomenon of these electromagnetic waves can be ascertained by solving Maxwell's wave motion equation for electromagnetic waves, however, the result is that the waves are propagated as electromagnetic TE waves that have no electric field component in the propagation direction.

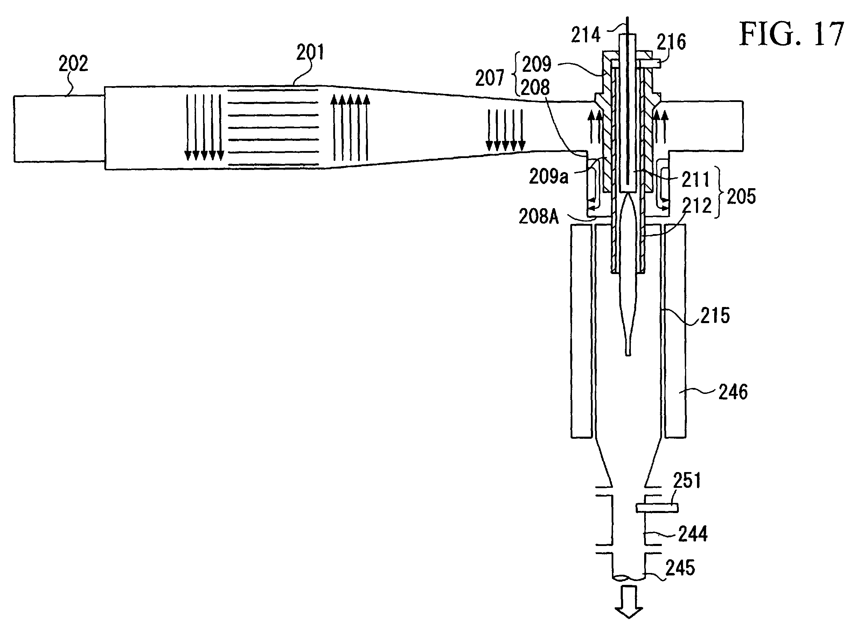

An example of these primary components $TE_{10}$ is shown by the propagation directions in the rectangular wave guide pipe in Fig. 17 by the orthogonally intersecting arrows.

Moreover, TM waves having electric field components in the direction of movement are generated in the annular cavity portion of a double circular cylinder wave guide pipe including a double circular cylinder conductor at the other end portion of the rectangular wave guide pipe 201 by the bonding action of the electromagnetic waves propagated in the wave guide pipe 201 with the electromagnetic waves reflected by the end of the pipe caused by the conductor 209.

The $TM_{01}$ waves that form this primary component are shown by the arrows in the annular cavity portion in Fig. 17.

Delicate adjustment of the propagation of the wave motion of the electromagnetic waves arising from secondary and greater higher harmonics is made by the tuner 204.

The isolator 203 protects the transmitter 202 from basic damage.

In this way, a stable mode $TM_{01}$ electric field is formed inside the circular cylinder wave guide pipe 207.

Naturally, a magnetic field is generated in a direction orthogonally intersection the electric field.

Because substances inserted into the relevant portion by the vibrating electromagnetic field are heated to a plasma state, if a high voltage is applied to electrodes 213 connected to the ignition device 213, an electric spark discharge is generated between the electrode 213 and an inner conductor 209 and ignition takes place.

As is shown in Fig. 17, the circular cylinder wave guide pipe 207 is formed from an outer conductor 208 and an inner conductor 209 having a smaller diameter than the outer conductor 208. The circular cylinder wave guide pipe 207 is connected to the vicinity of the terminal end portion of the square wave guide pipe 201 so as to extend in a vertical direction while communicating with the square wave guide pipe 201.

The inner conductor 209 is fixed to the top portion of the square wave guide pipe 201 and extends towards an end plate 208A of the outer conductor 208 while surrounding a quartz electric discharge pipe 205. This extended portion forms a probe antenna 209a.

The electric discharge pipe 205 is formed from an inner pipe 211 and an outer pipe 212 and is placed so as to be coaxial with the central axis of the circular cylinder wave guide pipe 207.

Moreover, a Tesla coil 214 for generating heat using the ignition device 213 is inserted inside the inner pipe 211 of the electric discharge pipe 205.

The distal end (the bottom end) of the inner pipe 211 is placed exactly a predetermined distance from the distal end of the probe antenna 209a on the inner side of the distal end of the outer pipe 212.

This distance is set to be the same as the distance as, for example, the distal end of the probe antenna 209a and the convergence portion where the energy from the microwaves converges.

The distal end portion of the outer pipe 212 communicates with a copper reaction pipe 215 through the end plate 208A of an outer conductor 208. The proximal end (i.e. the top end in the drawing) of the outer pipe 212 is mounted with a gap between itself and the inner conductor 209.

The symbol 217 denotes an optical sensor facing towards the outer pipe 212 that is exposed between the end plate 208A of the outer conductor 208 and the reaction pipe 215.

This optical sensor 217 monitors the state of plasma generation by detecting the luminosity.

A gas supply pipe 216 is inserted into the above gap at a tangential direction to the outer pipe 212. Argon gas, fleon gas (organic halogen compounds), air, and water vapor are supplied to the electric discharge pipe 205 via the gas supply pipe 216.

The argon gas, fleon gas, and air are selectively fed to the heater 218 from their respective supply sources by the opening and closing of the electromagnetic valves 219a, 219b, and 219c shown in Fig. 16.

Because the argon gas is supplied in order to facilitate the ignition prior to the plasma generation, it is stored in an argon cylinder 221.

A pressure adjustor 222 and a pressure switch 223 are provided between the argon cylinder 221 and the electromagnetic valve 219a.

Air is supplied from an air compressor 224 in order to increase the stability of the ignition by removing moisture remaining in the system and in order to expel gas remaining in the system. Atmospheric air, nitrogen gas, argon gas, and the like may be used for this air.

Because water vapor is necessary for the decomposition of the fleon gas, it is generated by feeding water from a water storage tank 226 using a plunger pump 225 to the heater 218.

A level switch 227 is provided in the water storage tank 226 for detecting variations in the water level.

The fleon gas is wet stored in a recovered fleon cylinder 228. A restricting apparatus 231, a mist separator 232, and a pressure switch 233 are provided between the recovered fleon cylinder 228 and an electromagnetic valve 219b.

The restricting apparatus 231 is provided in order to obtain a constant flow rate and may be formed from a capillary pipe and orifice combination, for example.

The mist separator 232 is intended to remove oil elements (lubricating oil) and moisture that are contained in the fleon gas, and an impact type or centrifugal separation type separator is used.

The heater 218 not only generates water vapor for reacting with the fleon gas, but is also intended to prevent trouble, such as water vapor inside the apparatus being cooled by the fleon gas and the like and recondensing, by heating the fleon gas and the like in advance. An electric type or steam type of beating method is employed in the heater 218.

Two parallel flow passages 234a and 234b are formed inside the heater body 218a. Fleon gas, argon gas, and air are circulated through one flow passage (the second flow passage) 234a, while water from a water storage tank 226 (the water supply source) is circulated through the other flow passage 234b.

A filling material 235, which provides resistance to the water vapor moving through the flow passage 234b, is provided in the flow passage 234b that creates the water vapor. The water vapor is thus unable to circulate smoothly through the flow passages.

An organic or inorganic granulated member, a fibrous member, a porous member, or the materials that form these may be employed for the filling material 235, however, from the viewpoint of preventing deterioration under high temperature, it is preferable that the material be an inorganic material such as oxides, carbides, nitrides, and the like typified by $SiO_2$, $Al_2O_3$, $TiO_2$, $MgO$, $ZrO_2$, and the like.

Note that a thermocouple 236 is provided in the vicinity of the exit of the heater 218.

Fleon gas and the like and water vapor that have transited the heater 218 are mixed together in a mixer 237 and thereafter supplied to electric discharge pipe 205 via the gas supply pipe 216.

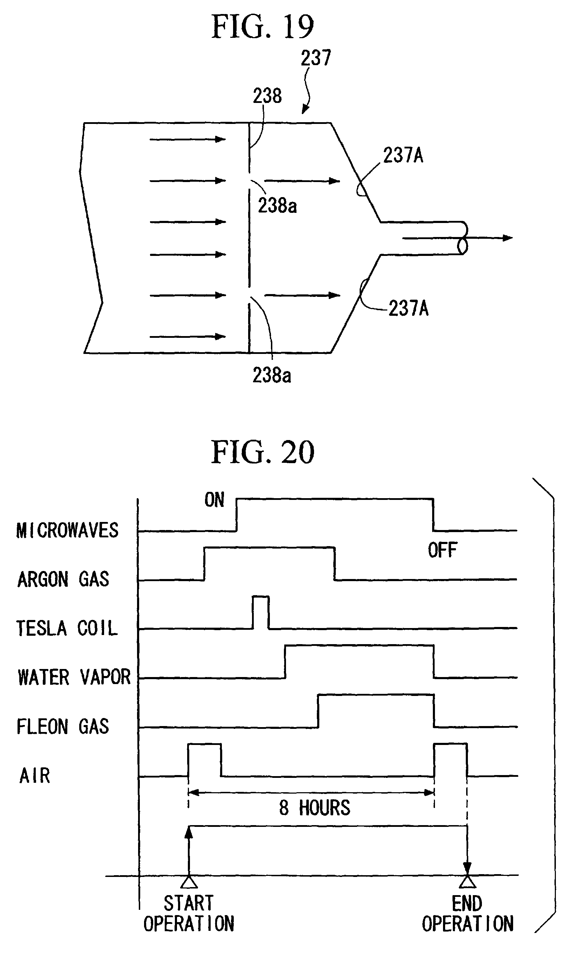

As is shown in Fig. 19, an orifice 238 is provided inside the mixer 237. The aperture 238a of the orifice 238 is set to between φ 0.1 to 5mm.

The exit end surface 237A of the mixer 237 that is faced by the aperture 238a forms an inclined face with the cross section of the flow passage becoming gradually smaller.

An exhaust gas treatment tank 241 is provided in order to render harmless acidic gas (hydrogen fluoride and hydrogen chloride) generated when the fleon gas is decomposed by neutralizing it. An alkaline suspension solution including water to which calcium hydroxide has been added is contained in the exhaust treatment tank 241.

For example, if the fleon gas to be decomposed is fleon R12 for use as a refrigerant that has been recovered from discarded refrigerators, the gas generated by the decomposition reaction shown in Formula 7 can be rendered harmless by the neutralization reaction shown in Formula 8.

(Formula 7)

$$CCl_2F_2 + 2H_2O \rightarrow 2HCl + 2HF + CO_2$$

(Formula 8)

$$2HCl + Ca(OH)_2 \rightarrow CaCl_2 + 2H_2O$$

$$2HF + Ca(OH)_2 \rightarrow CaF_2 + 2H_2O$$

Because the solubility of the neutralized product (i.e. the calcium chloride and the calcium fluoride) created in the neutralization reaction shown in Formula 8 is low, a portion thereof dissolves in the alkaline solution, however, the majority thereof exists as slurry.

Moreover, the carbon dioxide generated in the decomposition reaction in Formula 7 and the acidic gas that has been reduced by the neutralization reaction in Formula 8 to slightly below a discharge reference value are discharged to the outside by a blower 243 from a discharge duct 242 connected to the top of the exhaust gas treatment tank 241.

An intake pipe 245 connected to the reaction pipe 215 via an exchange coupling 244 is placed inside the exhaust gas treatment tank 241 so as to extend in a vertical direction with the bottom end portion thereof immersed in the alkali solution.

The distal end 245a of the intake pipe 245 is formed so as to be inclined at a predetermined angle relative to the vertical direction.

A cooler 246 provided with cold water pipes (not illustrated) is provided at the periphery of the reaction pipe 215.

The cooler 246 is provided to cool the gas generated by the decomposition reaction shown in Formula 7, however, it is controlled so that it only cools to above the dew point so as to prevent recondensation of the water vapor remaining inside the reaction pipe 215.

In the present embodiment, the gas is cooled to approximately 400°.

Effective use is made of the cooling water in the cooler 246 that has been warmed up from cooling the reaction pipe 215 (i.e. the warm water) by using it as a source of heat for heating the recovered fleon gas cylinder 228.

Namely, a heater 247 provided with warm water pipes (not illustrated) is provided at the periphery of the recovered fleon cylinder 228, and the recovered fleon cylinder 228 is heated by allowing cooling water that has been used to cool the reaction pipe 215 to circulate through the warm water pipes.

As is shown in Fig. 17, the exchange coupling 244 is able to be connected and disconnected between the reaction pipe 215 and the intake pipe 245 and a water injection nozzle 251 communicates with the interior of the exchange coupling 244.

Cooling water is sprayed from the water injection nozzle 251 so that the intake pipe 245 made from a resin, for example, Teflon is rapidly cooled to within a heatproof temperature range.

It should be noted that, if the intake pipe 245 is a Teflon pipe, it is cooled to 100°C or less.

The reason why the intake pipe 245 is made from resin is because the intake pipe 245 needs to have sufficient corrosion resistance to both the acidic solution formed when the acidic gas is dissolved in the cooling water and to the alkaline solution contained inside the exhaust gas treatment tank 241, and this is difficult to achieve with a metallic material.

In contrast, in the case of the reaction pipe 215, while the interior thereof is always in a dry state and thus has little likelihood of being corroded, it does need to have heat resistance. Therefore, by forming it from copper, it can be given a lengthy life span.

Gas generated by the decomposition reaction shown in Formula 7 is bubbled through the alkaline solution from the distal end (bottom end) of the intake pipe 245 and then discharged.

Because the neutralizing reaction in the alkaline solution is accelerated the greater the area of contact between the gas bubbles and the alkaline solution and the longer the time before the gas bubbles reach the surface of the solution, a bubble dividing means 252 is provided in the exhaust gas treatment tank 241 for accelerating the neutralization reaction shown in Formula 8 by dividing the gas bubbles into even smaller bubbles.

The bubble dividing means 252 is formed from a shaft portion 252b rotated by a motor 252a, a disc shaped blade holding portion 252c fixed to the distal end of the shaft portion 252b, and six blades 252d fixed to the outer edge portion of the blade holding portion 252c.

The shaft portion 252b, the blade holding portion 252c, and the blades 252d are all made from SUS material. The blades 252d intersect the blade holding portion 252c and are fixed by silver solder thereto at equal intervals in the peripheral direction.

The reason for fixing the blades by silver solder in this way is because normal welds are extremely susceptible to corrosion in the alkaline solution.

The bubble dividing means 252 are provided such that the center of the blade holding portion 252c is positioned above the distal end of the reaction pipe 215. The bubbles that float up from the distal end of the reaction pipe 215 strike the blades 252d which are rotating at 300 rpm and are divided further into bubbles having a diameter of between about 3 to 5 mm.

The bubble dividing means 252 also fulfills the function of creating a suspension solution of water and calcium hydroxide that is insoluble in water by stirring in calcium hydroxide powder added to the exhaust gas treatment tank 241.

Moreover, because the neutralization reaction shown in Formula 8 is a heat generating reaction, a cooler 253 is provided in the exhaust gas treatment tank 241 for cooling the tank internal temperature to below the heatproof temperature of the intake pipe 245.

In the cooler 253, a portion of the piping connected to a heat discharge section 253b, which is cooled by a fan 253a, is inserted into the exhaust gas treatment tank 241 and heat is taken by circulating a cooling medium such as water or the like through this piping which then discharges heat in the heat discharge section 253b.

Note that the temperature inside the tank is detected by a thermocouple 254.

Moreover, a pH sensor 255 is also provided in the exhaust gas treatment tank 241.

The pH value of the alkaline solution is constantly monitored by a control device 261 via the pH sensor 255 and when the pH value reaches 9 (after starting at between 11 and 12), for example, a warning means is operated upon an instruction from the control device 261 and the decomposition operation is halted.

Any warning means may be employed provided that it can summon the attention of those nearby and a means may be employed that flashes a lamp on and off, for example, or sounds a warning siren.

Because the slurry inside the exhaust gas treatment tank 241 gradually increases as the operating time becomes longer, after the operation thereof has been halted, the slurry is received together with the alkaline solution by a solid - liquid separator 262 and the solids and liquids are separated. Thereafter, the slurry is either disposed of as waste material or used in other applications.

The separated alkaline solution, however, is returned to the exhaust gas treatment tank 241 once more and is reused.

Note that any variations in the level of the solution in the exhaust gas treatment tank are detected by the level switch 256.

In a decomposition apparatus for an organic halogen compound having the above structure, the electromagnetic valve opening and closing operations and the Tesla coil 214 ignition operations are controlled by the control device 261 as is shown in Fig. 20.

As is clear from this diagram, in this decomposition apparatus, fleon gas is decomposed by batch treatment in 8-hour cycles.

Namely, before the fleon gas and water vapor are supplied, firstly air is supplied for a predetermined time (3 minutes) in order to remove remaining moisture. After the air supply has been stopped, the supply of argon gas is started in order to improve the ignition stability.

While the argon gas is being supplied, microwaves are transmitted and ignition is carried out using the Tesla coil. At the same time, water vapor and fleon gas are supplied and, thereafter, the supply of the argon gas is halted.

After the decomposition operation has been halted, air is supplied to the reaction pipe 215 for a predetermined time (5 minutes) in order to ensure stability and the residual acidic gas is purged.

The air used to purge the gas is supplied from the air compressor 224 via the gas supply pipe 216 with the electromagnetic valves 219a and 219b closed and the electromagnetic valve 219c opened.

In the above steps, there are times when the supply of the argon gas and the supply of the fleon gas overlap, however, these times from the starting of the supply of the fleon gas to the halting of the supply of the argon gas are extremely short and therefore pose no problems.

The reason for this is that, as long as the ignition state has been made stable, there is no longer any need to keep supplying the argon gas, and also from the standpoint of lowering costs, there is a need to keep the amount of argon consumption low.

Moreover, the control device 261 is constantly monitoring the supply pressure of the argon gas and fleon gas to the heater 218, the level of water in the water storage tank 226, the state of plasma generation, and the temperature and level of the solution inside the exhaust gas treatment tank 241 by receiving signals from various sensors such as the pressure switches 223 and 233, thermocouples 236 and 254, level switches 227 and 256, and the optical sensor 217. When one of these strays from the prescribed value, a concern arises that the operation is not being performed normally or efficiently and the operation is halted.

After the operation has been halted, air is supplied as described above in order to guarantee stability and the remaining gas within the apparatus is scavenged.

The operation of the decomposition apparatus of the present embodiment will now be described.

In this decomposition apparatus, firstly, the electromagnetic valves 219a and 219b are closed and the electromagnetic valve 219c is opened, thereby supplying air for three minutes from the air compressor 224 to the electric discharge pipe 205 via the gas supply pipe 216.

Because this air is heated to between 100 and 180°C by passing through the heater 218, the remaining moisture inside the apparatus can be definitely removed.

Next, the electromagnetic valve 219c is closed and the electromagnetic valve 219a is opened, thereby supplying argon gas to the electric discharge pipe 205.

At this time, because the argon gas is supplied from a direction tangential to the outer pipe 212 and flows down in a spiral configuration, sediment is formed in the vicinity of the distal end of the inner pipe 211 enabling the plasma to be easily held.

Moreover, the gas supply at this time is set at 4 to 40 l/min and more desirably to 15 l/min or more.

Within this setting range, the sediment is effectively formed and the plasma can be held more easily. In addition, the electric discharge pipe 205 tends not to be thermally affected by the plasma and melting deformation and damage thereto can be effectively prevented.

Moreover, at fixed intervals after the start of the argon gas supply microwaves are transmitted from the microwave transmitter 202.

The microwaves are transmitted by the square wave guide 201 towards the rear end side thereof and then transmitted further towards the circular cylinder wave guide 207.

At this time, a $TM_{01}$ mode having a high strength electrical field is formed as the electric field inside the circular cylinder wave guide 207. Moreover, because the electric field mode inside the square wave guide 201 and the electric field mode inside the circular cylinder wave guide 207 are coupled by the inner conductor 209, the electric field inside the circular cylinder wave guide 207 is stabilized.

Next, a heat is generated in the Tesla coil 214 by the ignition device 213 thereby causing ignition.

At this time, because moisture inside the electric discharge pipe 205 is removed by air and easily ignitable argon gas is supplied thereto in advance, the ignition is simplified.

Next, water is pumped out from the water storage tank 226 by the plunger pump 225 and the water vapor generated by passing this water through the heater 218 is supplied to the electric discharge pipe 205.

This water vapor is unable to circulate smoothly through the flow passages because of the filling material 235 with which the heater 218 has been filled, resulting in a constant amount of water vapor being constantly retained inside the heater 218.

As a result, it is possible to prevent water splashes caused by rippling and sudden boiling and to stabilize the water vapor outflow rate, and it is also possible to effectively suppress variations in the flow rate upstream of the mixer 237.

Accordingly, the plasma can be stabilized without there being any loss of the plasma, and it is possible to obtain an improvement in the treatment performance.

Next, the electromagnetic valve 219b is opened and fleon gas is supplied to the electric discharge pipe 205.

At this time, oil elements and moisture in the fleon gas discharged from the recovered fleon cylinder 228 are removed when the gas passes through the mist separator 232.

As a result, the generation of byproducts and contamination of the pipes and the like caused by lubricating oil in the fleon gas is suppressed, and the efficient and stable supply of fleon gas and the like is made possible. Moreover, the supply of excess moisture can be prevented and there is no plasma loss.

Accordingly, the plasma can be stabilized and it is possible to obtain an improvement in the treatment performance.

After the water vapor, argon gas, and fleon gas that have passed through the heater 218 and been fed into the mixer 237 have struck the orifice 238, the direction of the flow thereof is changed and they become more thoroughly mixed together by colliding with each other.

Moreover, because turbulence forms downstream of the orifice 238, the fleon gas and the like that passes through the aperture 238a is also mixed up downstream of the orifice as well.

Furthermore, in the present embodiment, because the mixing of the fleon gas and the like is accelerated by colliding against the end surface 237A on the exit side, they leave the mixer 237 in a more uniformly mixed state and are thus supplied to the electric discharge pipe 205.

As a result, there is sufficient decomposition reaction according to Formula 7 and it is possible to suppress the generation of byproducts such as chlorine gas and carbon monoxide.

When microwaves are irradiated onto the fleon gas supplied thus to the electric discharge pipe 205, the level of electronic energy in the electric discharge pipe 205 is high and thermal plasma heated to a temperature of 2000K to 6000K is generated.

At this time, because argon gas is supplied to the electric discharge pipe 205 at the same time as the fleon gas and the water vapor, there is no plasma loss.

Because the distal end of the inner pipe 211 is placed exactly a predetermined distance towards the inner side than the distal end of the probe antenna 209a, it is possible to avoid the generated plasma being thermally affected and to prevent the inner pipe 211 from being damaged by melting.

As a result, there is no marked deformation of the state of the plasma and a stable decomposition reaction is made possible.

Moreover, because the fleon gas is placed in a state in which it can be easily separated into chlorine atoms, fluorine atoms, and hydrogen atoms by the thermal plasma generation, it is easily decomposed by reacting with the water vapor, as is shown in Formula 7.

When the plasma is stable the electromagnetic valve 219a is closed and the supply of argon gas is halted.

The gas generated by the decomposition reaction is discharged into the alkaline solution in the exhaust gas treatment tank 241 via the exchange coupling 244 and the intake pipe 245.

However, because these generated gases are at extremely high temperature, they are firstly cooled to a approximately 400°C by the cooler 246 provided at the reaction pipe 215 before they pass into the intake pipe 245.

At this temperature, because there is no recondensation of the water vapor remaining inside the reaction pipe 215, the reaction pipe 215 is held in a dry state and there is no plasma loss.

On the other hand, the cooling water of the cooler 246 that has been heated to approximately 50°C by cooling the reaction pipe 215 is fed to the heater 247 provided in the recovered fleon cylinder 228 where it prevents mist from being generated in the cylinder 228 and the pipes downstream thereof when the liquid fleon gas inside the recovered fleon cylinder 228 is vaporized, and suppresses pressure variations due to temperature reductions.

The cooling water from which the heat has been taken by the above operation can be reused as cooling water in the cooler 246 enabling the amount of water consumed to be kept extremely low.

The generated gas that has been cooled by the cooler 246 undergoes further rapid cooling to less than approximately 100°C as it passes through an exchange coupling 244 from cooling water sprayed from a water spray nozzle 251.

As a result, it is possible to use the resin intake pipe 245 within its heat proof temperature range and it can be protected against heat damage caused by high temperatures.

At this time, because acidic liquid is created as the gas generated in the decomposition reaction of Formula 7 is dissolved in the cooling water, the exchange coupling 244 is gradually corroded and, in some cases, should be replaced depending on the extent of the corrosion.

Namely, because only the exchange coupling 244 needs to be replaced because of corrosion downstream from the reaction pipe 215, costs can be reduced and the task of replacement simplified.

The generated gas that is discharged through the intake pipe 245 into the alkaline solution is rendered harmless by the neutralization reaction in Formula 8 and discharged via the exhaust ducts 242.

Because this neutralization reaction is a heat generating reaction, the temperature of the alkaline solution is maintained at below 70°C by the cooler 253 so as to protect the intake pipe 245 from heat damage.

The generated gas that is discharged as bubbles from the distal end of the intake pipe 245 is divided into even smaller bubbles by the action of the blades 252d of the bubble dividing means 252. Therefore, the surface area thereof that comes into contact with the alkaline solution is increased and the time taken until the gas reaches the solution of the surface is lengthened. Consequently, the neutralization reaction is accelerated.

As a result, there is no discharging of an amount of acidic gas exceeding a reference value to the outside of the system caused by the neutralization reaction being insufficient.

The neutral products created by the neutralization reaction remain in the alkaline solution as slurry, however, after the decomposition operation has been halted, this slurry is fed into the solid - liquid separator together 262 with the alkaline solution and the solids and liquid are continuously separated.

Because this separated solution is returned to the exhaust gas treatment tank 241 for reuse, in the present embodiment, this coupled with the reuse of the cooling water enables the amount of water consumption to be greatly reduced.

Moreover, safety can also be increased by running the air compressor 224 after the decomposition operation has been halted in order to clean out any acidic gas still remaining in the apparatus.

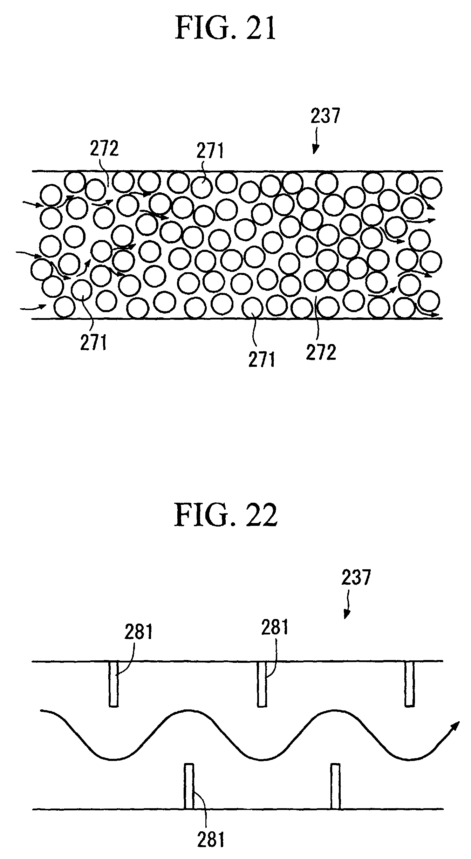

Next, a description will be given of another embodiment of the present invention, with reference made to Figs 21 to 23. In Fig. 21, instead of the orifice 238, the mixer 237 is filled with beads (i.e. a granular material) 271.

In this structure as well, in the process of the fleon gas and the like and the water vapor circulating at random through the gaps 272 formed in the mixer 237, the fleon gas and the like and the water vapor collide against each other and the mixing is thereby accelerated. It is therefore possible to achieve an improvement in the stabilizing of the decomposition conditions.

Fig. 22 shows an example of the placement of a static mixer in which a plurality of baffle plates 281 at different intervals to each other on the inner peripheral surfaces of the lower portions and top portions of the mixer 237.

In this structure as well, because the fleon gas and the like and the water vapor are circulated in a zigzag fashion while colliding against the baffle plates 281, the mixing is accelerated. It is therefore possible to achieve an improvement in the stabilizing of the decomposition conditions.

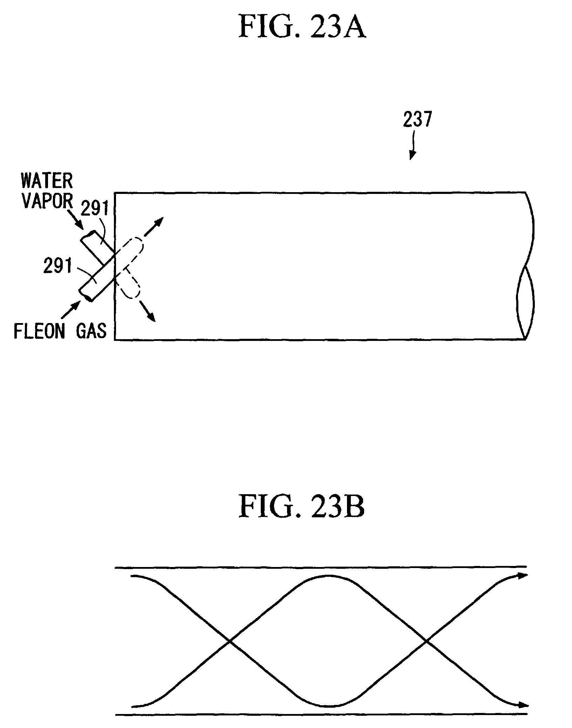

Further, Fig. 23A shows an example of a swirl mixer in which a pair of slanted nozzles 291 for separately introducing fleon gas and the like and water vapor are positioned at the entry side of the mixer 237 on opposite sides sandwiching the center in the radial direction. The slanted nozzles 291 are inclined at predetermined angles towards the exit side of the mixer 237 relative to the outer peripheral tangential direction of the mixer 237.

In this structure as well, as is shown in Fig. 23B, the fleon gas and the like and the water vapor introduced into the mixer 237 via the nozzles 291 circulates inside the mixer 237 while forming swirl flows (i.e. a whirlpool flow) running in the opposite directions to each other. Therefore, the mixing together of both is accelerated.

Note that the organic halogen compound decomposition apparatus according to the present invention is not limited to the above described embodiments and may include the forms below.

(1) Instead of pH control of the alkaline solution as a means for avoiding the discharge of acidic gas to the outside of the system caused by the neutralization reaction being insufficient, it is also possible to perform control using a motor current value.

Namely, if the number of motor revolutions decreases or stops, the bubbles being discharged from the intake pipe 245 are not being sufficiently divided and the neutralization reaction may not be being performed satisfactorily.

Therefore, if any abnormalities in the motor revolutions are detected based on the motor current value, then if the operation of the decomposition apparatus is halted by an instruction from the control device 261, it is possible to prevent the discharge of acidic gas to the outside of the system.

(2) Because the interior of the reaction pipe 215 is kept in a dry state, there is practically no corrosion effect caused by acidic gas generated by the decomposition reaction of Formula 7.

However, in order to improve the safety even more, it is also possible to install a simple booth enveloping the reaction pipe 215 and place an exhaust gas sensor for detecting $CO_2$ gas, CO gas and the like between the booth and the reaction pipe 215.

In this structure, the extent of corrosion of the reaction pipe 215 can be constantly monitored by the control device 261 via these exhaust gas sensors. Therefore, even if the reaction pipe 215 corrodes and gas generated by the decomposition reaction of Formula 7 escapes from the reaction pipe 215, the operation of the decomposition apparatus can be halted by an instruction from the control device 261 and the discharge of acidic gas to the outside of the system can be prevented by suctioning the escaped gas.

In this case, the gas suction can also be performed by the blower 243 provided in the exhaust duct 242.

(3) Because the slurry inside the exhaust gas treatment tank 241 precipitates to the bottom if it is left overnight after operations have been halted, it is also possible to pump out the precipitated high concentration slurry using a pump and to dispose of this using the solid - liquid separator.

In this case, because it is possible to pump out the high concentration slurry only without it being mixed in with free alkaline, highly efficient slurry treatment is possible.

Moreover, if a granulating agent or an agglomerating agent or the like is added to the alkaline solution so as to increase the granularity of the slurry, the precipitation time can be shortened, and even more efficient slurry treatment can be performed.

(4) Instead of placing the distal end of the Tesla coil 214 inside the electric discharge pipe 205, it is also possible to place it outside the electric discharge pipe 205 and to achieve ignition by spark discharge.

(5) Instead of changing the fleon to a gas state by heating the recovered fleon cylinder 228 and then allowing this fleon gas to flow out, it is also possible to invert the recovered fleon cylinder 228 and to allow the recovered fleon to flow out in a liquid state. After the quantity of the flow has been made constant using a restricting apparatus such as a differential pressure control valve or the like, the fleon may then be heat vaporized and fed to the heater 218.

In this case, flow variations caused by temperature reductions can be suppressed by heating the restricting apparatus and the pipes.

(6) Instead of using the cooling water used to cool the reaction pipe 215 to heat the recovered fleon cylinder 228, it is possible to use the cooling water from the cooler 253 used for the slurry cooling in the exhaust gas treatment tank 241.

(7) As described above, the distance that the distal end of the inner pipe 211 is from the distal end of the probe antenna 209a inside the outer pipe 212 is optimally set to the same distance as the distal end of the probe antenna 209a is from the portion where the microwave energy converges, provided that the outer pipe 212 is not melted, however, it is also possible to alter this considering the melting of the outer pipe 212.

(8) The bubble dividing means 252 may also be a screw type apparatus in which a propeller is fixed to the distal end of a shaft portion.

Further, each structural element 252b, 252c, and 252d of the bubble dividing means 252 may be made from a resin such as Teflon, and the bubble dividing means may be formed by joining these together using nuts and bolts.

In this structure, because not only are there no welded portions, but each structural element 252b, 252c, and 252d is formed from resin, this apparatus has extremely good corrosion resistance.

(9) Instead of placing the distal end portion of the intake pipe 245 at an inclined predetermined angle relative to the vertical direction, it may be formed substantially in a U shape.

(10) The neutral solution stored in the exhaust gas treatment tank 241 is not limited to the above alkaline suspension solution and it is also possible to use an aqueous alkaline solution such as a sodium hydroxide aqueous solution or the like.

(Fourth Embodiment)

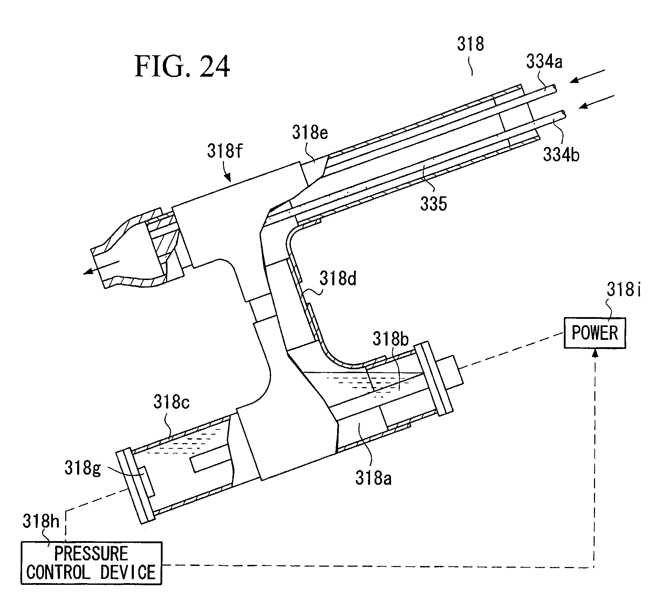

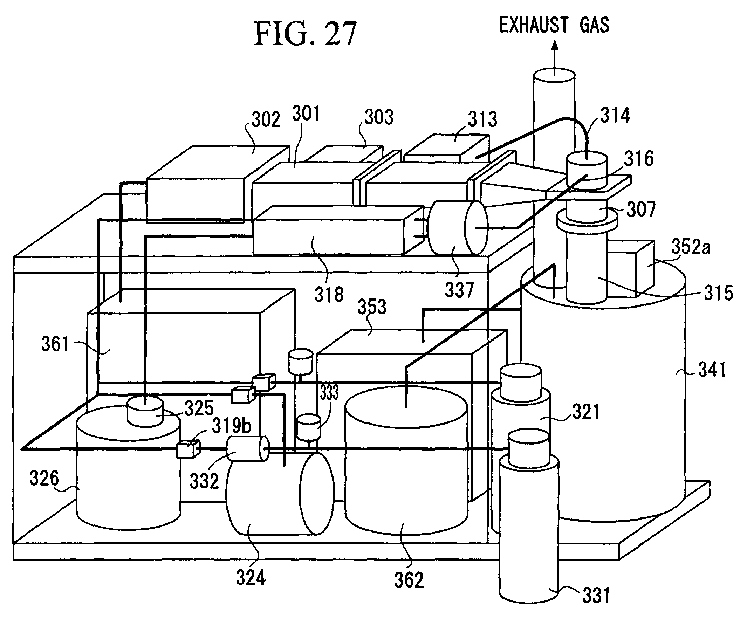

The fourth embodiment of the present invention will now be described with reference to Figs. 24 to 30. A square wave guide 301 extending in the horizontal direction in Fig. 27 is provided with a microwave transmitter 302 at the starting end portion thereof (i.e. the left hand side in the drawing) for transmitting microwaves at a frequency of 2.45 GHz and sending these microwaves from the starting end side towards the terminal end side (i.e. towards the right hand side of the drawing).

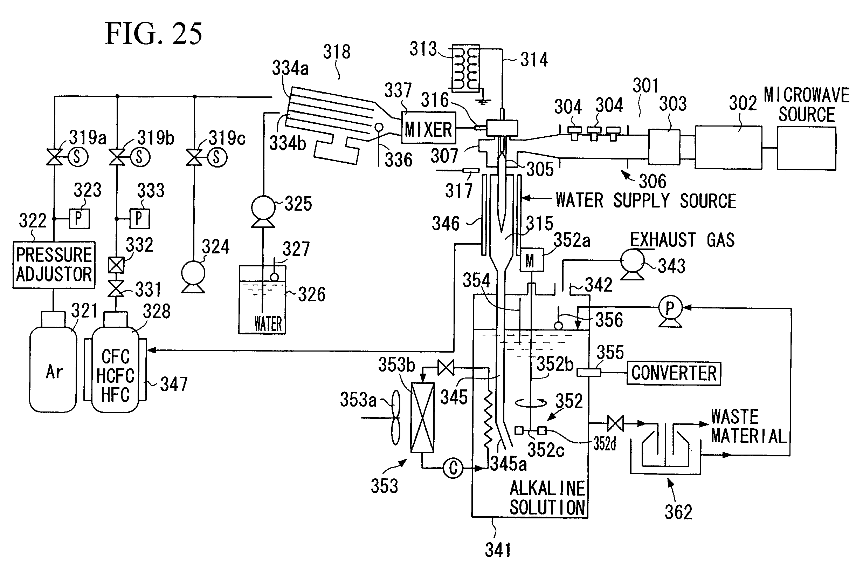

As is shown in Fig. 25, the square wave guide 301 is provided with an isolator 303 for preventing reflected microwaves that are reflected by the terminal end side so as to end up coming back towards the starting end side from affecting the transmitting side by absorbing these microwaves. The square wave guide 301 is also provided with a tuner 306 which causes each of a plurality of wave motion adjusting members 304 to be inserted or retracted so as to adjust the amount of inconsistency in the wave motion and thereby converge the electric waves at the electric discharge pipe 305.

This operation is described below in detail.

The microwave transmitter 302 drives a magnetron placed at one end of a wave guide pipe having a rectangular cross section so as to radiate electromagnetic waves in a predetermined frequency. The characteristics of the propagation phenomenon of these electromagnetic waves can be ascertained by solving Maxwell's wave motion equation for electromagnetic waves, however, the result is that the waves are propagated as electromagnetic TE waves that have no electric field component in the propagation direction.

An example of these primary components $TE_{10}$ is shown by the propagation directions in the rectangular wave guide pipe in Fig. 25 by the orthogonally intersecting arrows. Moreover, TM waves having electric field components in the direction of movement are generated in the annular cavity portion of a double circular cylinder wave guide pipe including a double circular cylinder conductor at the other end portion of the rectangular wave guide pipe 301 by the bonding action of the electromagnetic waves propagated in the wave guide pipe 301 with the electromagnetic waves reflected by the end of the pipe caused by the conductor 309.

The $TM_{01}$ waves that form this primary component are shown by the arrows in the annular cavity portion in Fig. 25.

Delicate adjustment of the propagation of the wave motion of the electromagnetic waves arising from secondary and greater higher harmonics is made by the tuner 304.

The isolator 303 protects the transmitter 302 from basic damage.

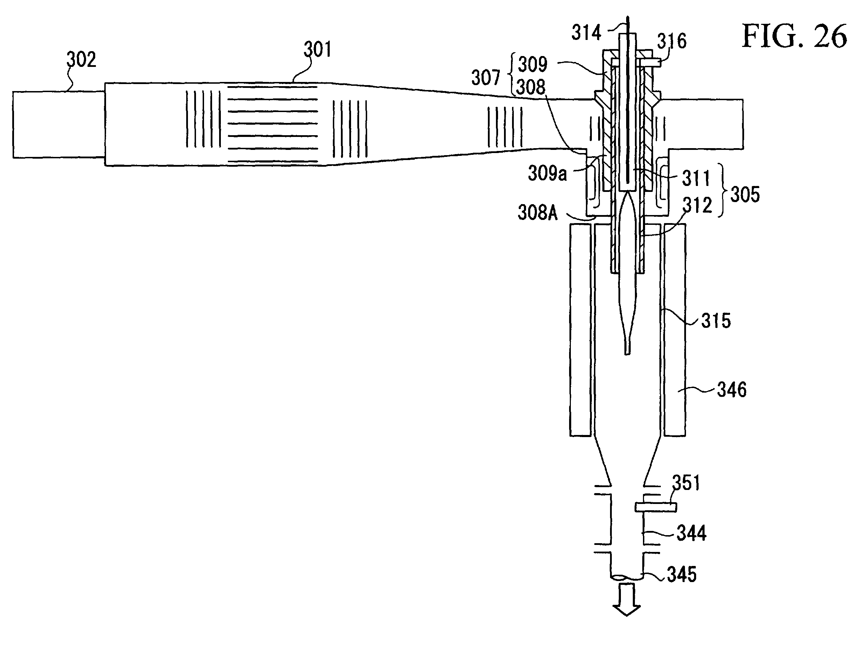

As is shown in Fig. 26, the circular cylinder wave guide 307 is formed from an outer conductor 308 and an inner conductor 309 having a smaller diameter than the outer conductor 308. The circular cylinder wave guide pipe 307 is connected to the vicinity of the terminal end portion of the square wave guide pipe 301 so as to extend in a vertical direction while communicating with the square wave guide pipe 301.

The inner conductor 309 is fixed to the top portion of the square wave guide pipe 301 and extends towards an end plate 308A of the outer conductor 308 while surrounding a quartz electric discharge pipe 305. This extended portion forms a probe antenna 309a.

The electric discharge pipe 305 is formed from an inner pipe 311 and an outer pipe 312 and is placed so as to be coaxial with the central axis of the circular cylinder wave guide pipe 307.

Moreover, a Tesla coil 314 for generating heat using the ignition device 313 is inserted inside the inner pipe 311 of the electric discharge pipe 305.

The distal end (the bottom end) of the inner pipe 311 is placed exactly a predetermined distance from the distal end of the probe antenna 309a on the inner side of the distal end of the outer pipe 312.

The distal end portion of the outer pipe 312 communicates with a copper reaction pipe 315 through the end plate 308A of an outer conductor 308. The proximal end (i.e. the top end in the drawing) of the outer pipe 312 is mounted with a gap between itself and the inner conductor 309.

The symbol 317 denotes an optical sensor facing towards the outer pipe 312 that is exposed between the end plate 308A of the outer conductor 308 and the reaction pipe 315.

This optical sensor 317 monitors the state of plasma generation by detecting the luminosity.

A gas supply pipe 316 is inserted into the above gap at a tangential direction to the outer pipe 312. Argon gas, fleon gas (organic halogen compounds), air, and water vapor are supplied to the electric discharge pipe 305 via the gas supply pipe 316.

The argon gas, fleon gas, and air are selectively fed to the fluid heating apparatus 318 from their respective supply sources by the opening and closing of the electromagnetic valves 319a, 319b, and 319c shown in Fig. 25.

Because the argon gas is supplied in order to facilitate the ignition prior to the plasma generation, it is stored in an argon cylinder 321.

A pressure adjustor 322 and a pressure switch 323 are provided between the argon cylinder 321 and the electromagnetic valve 319a.

Air is supplied from an air compressor 324 in order to increase the stability of the ignition by removing moisture remaining in the system and in order to expel gas remaining in the system. Atmospheric air, nitrogen gas, argon gas, and the like may be used for this air.

Because water vapor is necessary for the decomposition of the fleon gas, it is generated by feeding water from a water storage tank 326 using a plunger pump 325 to the fluid heating apparatus 318.

A level switch 327 is provided in the water storage tank 326 for detecting variations in the water level.

The fleon gas is wet stored in a recovered fleon cylinder 328. A restricting apparatus 331, a mist separator 332, and a pressure switch 333 are provided between the recovered fleon cylinder 328 and an electromagnetic valve 319b.

The restricting apparatus 331 is provided in order to obtain a constant flow rate and may be formed from a capillary pipe and orifice combination, for example.

The mist separator 332 is intended to remove oil elements (lubricating oil) and moisture that are contained in the fleon gas, and an impact type or centrifugal separation type separator is used.

The fluid heating apparatus 318 not only generates water vapor for reacting with the fleon gas, but is also intended to prevent trouble, such as water vapor inside the apparatus being cooled by the fleon gas and the like and recondensing, by heating the fleon gas and the like in advance.

The fluid heating apparatus 318 is provided with water 318a as a heating medium; a heater 318b for heating the water 318a; a pipe shaped vaporization chamber 318c for housing the water 318a and the heater 318b; a liquefaction chamber 318e provided above the vaporization chamber 318c and penetrated by flow passages 334a and 334b through which liquid flows; and a communicating pipe 318d provided between the vaporization chamber 318c and the liquefaction chamber 318e through which the water 318a circulates in vapor and liquid states. The vaporization chamber 318c, the liquefaction chamber 318e, and the communicating pipe 318d form a sealed container 318f.

The liquefaction chamber 318e and the flow passages 334a and 334b are slanted in the longitudinal direction thereof relative to the horizontal surface and the communicating pipe 318d is connected to the bottom end of the slant of the bottom surface of the liquefaction chamber 318e.

Here, from the standpoint of simplifying manufacturing firstly, in the fluid heating apparatus 318 of the present embodiment, the vaporization chamber 318c and the liquefaction chamber 318e penetrated by the flow passages 334a and 334b are both connected vertically to the communicating pipe 318d. Thereafter, when it is mounted on the decomposition apparatus for organic halogen compounds, the liquefaction chamber 318e is positioned so as to be on a diagonal slant. Namely, the slant of the liquefaction chamber 318e, and the flow passages 334a and 334b is formed at the time when these are mounted on the fluid heating apparatus 318.

Note that the vaporization chamber 318c is also positioned on a slant, however, the vaporization chamber 318c does not need to be placed on a slant, and the existence or otherwise of a slant and the orientation of any slant is not limited by the present embodiment.

Note that it is of course possible to use a medium other than water as the heating medium described above.

The flow passages 334a and 334b are slanted parallel to each other and fleon gas, argon gas, and air are introduced into one flow passage 334a, while water from a water storage tank 326 is introduced into the other flow passage 334b and water vapor is generated..

The flow passage 334b that creates the water vapor is filled with a resisting member 335 that provides resistance to the water vapor moving through the flow passage 334b. The water vapor is thus unable to circulate smoothly through the flow passages

An organic or inorganic granulated member, a fibrous member, a porous member, or the materials that form these may be employed for the resisting member 335, however, from the viewpoint of preventing deterioration under high temperature, it is preferable that the member be an inorganic material such as oxides, carbides, nitrides, and the like typified by $SiO_2$, $Al_2O_3$, $TiO_2$, $MgO$, $ZrO_2$, and the like.

Note that a thermocouple 336 is provided in the vicinity of the exit of the fluid heating apparatus 318.

There are also provided a pressure detection device 318g for detecting the pressure of the water 318a and a pressure control device 318h for controlling a power source 318i of the heater 318b based on the output from the pressure detection device 318g. As a result, it is possible to heat the liquid circulating through the flow passages 334a and 334b, while keeping the pressure constant.

Fleon gas and the like and water vapor that have transited the heater 318 are mixed together in a mixer 337 and thereafter supplied to electric discharge pipe 305 via the gas supply pipe 316.

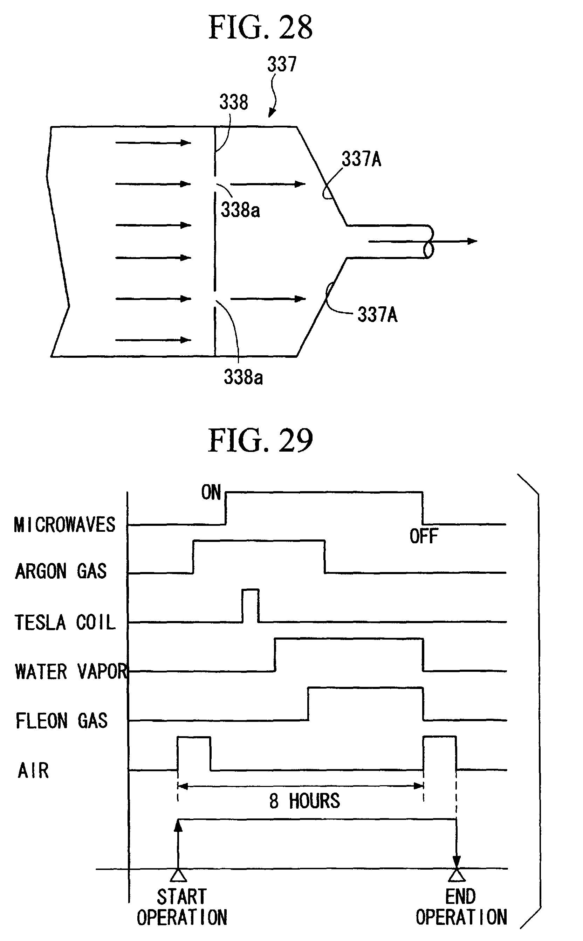

As is shown in Fig. 28, an orifice 338 is provided inside the mixer 337. The aperture 338a of the orifice 338 is set to between $\phi$ 0.1 to 5mm.

The exit end surface 337A of the mixer 337 that is faced by the aperture 338a forms an inclined face with the cross section of the flow passage becoming gradually smaller.

An exhaust gas treatment tank 341 is provided in order to render harmless acidic gas (hydrogen fluoride and hydrogen chloride) generated when the fleon gas is decomposed by neutralizing it. An alkaline suspension solution including water to which calcium hydroxide has been added is contained in the exhaust treatment tank 341.

For example, if the fleon gas to be decomposed is fleon R12 for use as a refrigerant that has been recovered from discarded refrigerators, the gas generated by the decomposition reaction shown in Formula 9 can be rendered harmless by the neutralization reaction shown in Formula 10.

(Formula 9)

$$CCl_2F_2 + 2H_2O \rightarrow 2HCl + 2HF + CO_2$$

(Formula 10)

$$2HCl + Ca\,(OH)_2 \rightarrow CaCl_2 + 2H_2O$$

$$2HF + Ca\,(OH)_2 \rightarrow CaF_2 + 2H_2O$$

Because the solubility of the neutralized product (i.e. the calcium chloride and the calcium fluoride) created in the neutralization reaction shown in Formula 10 is low, a portion thereof dissolves in the alkaline solution, however, the majority thereof exists as slurry.

Moreover, the carbon dioxide generated in the decomposition reaction in Formula 9 and the acidic gas that has been reduced by the neutralization reaction in Formula 10 to slightly below a discharge reference value are discharged to the outside by a blower 343 from a discharge duct 342 connected to the top of the exhaust gas treatment tank 341.

An intake pipe 345 connected to the reaction pipe 315 via an exchange coupling 344 is placed inside the exhaust gas treatment tank 341 so as to extend in a vertical direction with the bottom end portion thereof immersed in the alkali solution.

The distal end 345a of the intake pipe 345 is formed so as to be inclined at a predetermined angle relative to the vertical direction.

A cooler 346 provided with cold water pipes (not illustrated) is provided at the central portion in the axial direction of the reaction pipe 315 so as to surround the peripheral surface thereof.

The cooler 346 is provided to cool the gas generated by the decomposition reaction shown in Formula 9, however, it is controlled so that it only cools to above the dew point so as to prevent recondensation of the water vapor remaining inside the reaction pipe 315.

In the present embodiment, the gas is cooled to approximately 400°.

Effective use is made of the cooling water (i.e. the warm water) in the cooler 346 that has been warmed up from cooling the reaction pipe 315 by using it as a source of heat for heating the recovered fleon gas cylinder 328.

Namely, a heater 347 provided with warm water pipes (not illustrated) is provided at the periphery of the recovered fleon cylinder 328, and the recovered fleon cylinder 328 is heated by allowing cooling water that has been used to cool the reaction pipe 315 to circulate through the warm water pipes.

As is shown in Fig. 26, the exchange coupling 344 is able to be connected and disconnected between the reaction pipe 315 and the intake pipe 345 and a water injection nozzle 351 communicates with the interior of the exchange coupling 344.

Cooling water is sprayed from the water injection nozzle 351 so that the intake pipe 345 made from a resin, for example, Teflon is rapidly cooled to within a heatproof temperature range.

It should be noted that, if the intake pipe 345 is a Teflon pipe, it is cooled to 100°C or less.

The reason why the intake pipe 345 is made from resin is because the intake pipe 345 needs to have sufficient corrosion resistance to both the acidic solution formed when the acidic gas is dissolved in the cooling water and to the alkaline solution contained inside the exhaust gas treatment tank 341, and this is difficult to achieve with a metallic material.

In contrast, in the case of the reaction pipe 315, while the interior thereof is always in a dry state and thus has little likelihood of being corroded, it does need to have heat resistance. Therefore, by forming it from copper, it can be given a lengthy life span.

Gas generated by the decomposition reaction shown in Formula 9 is bubbled through the alkaline solution from the distal end (bottom end) of the intake pipe 345 and then discharged.

Because the neutralizing reaction in the alkaline solution is accelerated the greater the area of contact between the gas bubbles and the alkaline solution and the longer the time before the gas bubbles reach the surface of the solution, a bubble dividing means 352 is provided in the exhaust gas treatment tank 341 for accelerating the neutralization reaction shown in Formula 10 by dividing the gas bubbles into even smaller bubbles.

The bubble dividing means 352 is formed from a shaft portion 352b rotated by a motor 352a, a disc shaped blade holding portion 352c fixed to the distal end of the shaft portion 352b, and six blades 352d fixed to the outer edge portion of the blade holding portion 352c.

The shaft portion 352b, the blade holding portion 352c, and the blades 352d are all made from SUS material. The blades 352d intersect the blade holding portion 352c and are fixed by silver solder thereto at equal intervals in the peripheral direction.

The reason for fixing the blades by silver solder in this way is because normal welds are extremely susceptible to corrosion in the alkaline solution.

The bubble dividing means 352 are provided such that the center of the blade holding portion 352c is positioned above the distal end of the reaction pipe 315. The bubbles that float up from the distal end of the reaction pipe 315 strike the blades 352d which are rotating at 300 rpm and are divided further into bubbles having a diameter of between about 3 to 5 mm.

The bubble dividing means 352 also fulfills the function of creating a suspension solution of water and calcium hydroxide that is insoluble in water by stirring in calcium hydroxide powder added to the exhaust gas treatment tank 341.

Moreover, because the neutralization reaction shown in Formula 10 is a heat generating reaction, a cooler 353 is provided in the exhaust gas treatment tank 341 for cooling the tank internal temperature to below the heatproof temperature of the intake pipe 345.

In the cooler 353, a portion of the piping connected to a heat discharge section 353b, which is cooled by a fan 353a, is inserted into the exhaust gas treatment tank 341 and heat is taken by circulating a cooling medium such as water or the like through this piping which then discharges heat in the heat discharge section 353b.

Note that the temperature inside the tank is detected by a thermocouple 354.

Moreover, a pH sensor 355 is also provided in the exhaust gas treatment tank 341.

The pH value of the alkaline solution is constantly monitored by a control device 361 via the pH sensor 355 and when the pH value reaches 9 (after starting at between 11 and 12), for example, a warning means is operated upon an instruction from the control device 361 and the decomposition operation is baited.

Any warning means may be employed provided that it can summon the attention of those nearby and a means may be employed that flashes a lamp on and off, for example, or sounds a warning siren.

Because the slurry inside the exhaust gas treatment tank 341 gradually increases as the operating time becomes longer, after the operation thereof has been halted, the slurry is received together with the alkaline solution by a solid - liquid separator 362 and the solids and liquids are separated. Thereafter, the slurry is either disposed of as waste material or used in other applications.

The separated alkaline solution, however, is returned to the exhaust gas treatment tank 341 once more and is reused.

Note that any variations in the level of the solution in the exhaust gas treatment tank are detected by the level switch 356.

In a decomposition apparatus for an organic halogen compound having the above structure, the electromagnetic valve opening and closing operations and the Tesla coil 314 ignition operations are controlled by the control device 361 as is shown in Fig. 29.

As is clear from this diagram, in this decomposition apparatus, fleon gas is decomposed by batch treatment in 8-hour cycles.

Namely, before the fleon gas and water vapor are supplied, firstly air is supplied for a predetermined time (3 minutes) in order to remove remaining moisture. After the air supply has been stopped, the supply of argon gas is started in order to improve the ignition stability.

While the argon gas is being supplied, microwaves are transmitted and ignition is carried out using the Tesla coil. At the same time, water vapor and fleon gas are supplied and, thereafter, the supply of the argon gas is halted.

After the decomposition operation has been halted, air is supplied for a predetermined time (5 minutes) in order to ensure stability and the residual acidic gas is purged.

In the above steps, there are times when the supply of the argon gas and the supply of the fleon gas overlap, however, these times from the starting of the supply of the fleon gas to the halting of the supply of the argon gas are extremely short and therefore pose no problems.

The reason for this is that, as long as the ignition state has been made stable, there is no longer any need to keep supplying the argon gas, and also from the standpoint of lowering costs, there is a need to keep the amount of argon consumption low. In particular, because microwave based plasma is extremely stable in comparison with other plasma, for example, high frequency induction plasma, even if the supply of argon gas is halted, there is practically no effect from the fleon gas on the plasma forming process.

Moreover, the control device 361 is constantly monitoring the supply pressure of the argon gas and fleon gas to the heater 318, the level of water in the water storage tank 326, the state of plasma generation, and the temperature and level of the solution inside the exhaust gas treatment tank 341 by receiving signals from various sensors such as the pressure switches 323 and 333, thermocouples 336 and 354, level switches 327 and 356, and the optical sensor 317. When one of these strays from the prescribed value, a concern arises that the operation is not being performed normally or efficiently and the operation is halted.

After the operation has been halted, air is supplied as described above in order to guarantee stability and the remaining gas within the apparatus is scavenged.

The operation of the decomposition apparatus of the present embodiment will now be described.

In this decomposition apparatus, firstly, the electromagnetic valves 319a and 319b are closed and the electromagnetic valve 319c is opened, thereby supplying air for three minutes from the air compressor 324 to the electric discharge pipe 305 via the gas supply pipe 316.

Because this air is heated to between 100 and 180°C by passing through the heater 318, the remaining moisture inside the apparatus can be definitely removed.

Next, the electromagnetic valve 319c is closed and the electromagnetic valve 319a is opened, thereby supplying argon gas to the electric discharge pipe 305.

At this time, because the argon gas is supplied from a direction tangential to the outer pipe 312 and flows down in a spiral configuration, sediment is formed in the vicinity of the distal end of the inner pipe 311 enabling the plasma to be easily held.

Moreover, the gas supply at this time is set at 4 to 40 l/min and more desirably to 15 l/min or more.

Within this setting range, the sediment is effectively formed and the plasma can be held more easily. In addition, the electric discharge pipe 305 tends not to be thermally affected by the plasma and melting deformation and damage thereto can be effectively prevented.

Moreover, at fixed intervals after the start of the argon gas supply microwaves are transmitted from the microwave transmitter 302.

The microwaves are transmitted by the square wave guide 301 towards the rear end side thereof and then transmitted further towards the circular cylinder wave guide 307.

At this time, a $TM_{01}$ mode having a high strength electrical field is formed as the electric field inside the circular cylinder wave guide 307. Moreover, because the electric field mode inside the square wave guide 301 and the electric field mode inside the circular cylinder wave guide 307 are coupled by the inner conductor 309, the electric field inside the circular cylinder wave guide 307 is stabilized.

Naturally, a magnetic field is generated in a direction orthogonally intersecting the electric field. The gas introduced into the electric discharge pipe 305 is heated to a plasma state by this vibrating electromagnetic field.

Next, a heat is generated in the Tesla coil 314 by the ignition device 313 thereby causing ignition.

At this time, because moisture inside the electric discharge pipe 305 is removed by air and easily ignitable argon gas is supplied thereto in advance, the ignition is simplified.

Next, water is pumped out from the water storage tank 326 by the plunger pump 325 and the water vapor generated by passing this water through the heater 318 is supplied to the electric discharge pipe 305.

In the fluid heating apparatus 318, the water inside the flow passage 334b is kept stable and is changed to water vapor as a result of the heating by condensation heat transfer using the water 318a as a heating medium and by the action of the resisting member 335, with which the flow passage 334b has been filled, and it becomes possible to prevent water splashes caused by rippling and sudden boiling and to stabilize the outflow rate of water vapor out from the flow passage 334b, and it is also possible to effectively suppress variations in the flow rate upstream of the mixer 337.

Specifically, firstly, the interior of the fluid heating apparatus 318 is placed in a vacuum, the water 318a is then sealed inside, and the apparatus is shut tight. In this state, a portion of the water 318a is vaporized and this water vapor and the liquid water are placed in a mixed state inside the sealed container 318f.

When the water 318a inside the vaporization chamber 318c is heated by the heater 318b, a portion thereof is vaporized and moves to the liquefaction chamber 318e side. In the liquefaction chamber 318e, the water vapor is cooled by the fluid inside the flow passages 334a and 334b and condenses. Namely, because the water vapor, which has become a heat source, directly heats the flow passages 334a and 334b by condensation heat transfer, the heat conduction time is extremely short and it is possible to heat and vaporize the water inside the flow passage 334b stably. As a result, it is possible to prevent variations in the vaporization amount that would accompany variations of the fluid.

Moreover, it is possible to control the temperature of the beating by controlling the pressure. Namely, although there are slight variations due to the amount of vaporization of the water 318a inside the sealed container 318f, it can be safely said that the volume of water vapor in the sealed container 318f remains constant. Therefore, the temperature of the water vapor is determined solely by the pressure inside the system. In this fluid heating apparatus 318, because the pressure control device 318h controls the output of the heater 318b based on the output of the pressure detection device 318g, it is possible to easily control the temperature of the heating medium and to heat the fluid stably.

Furthermore, the water vapor that has been vaporized inside the flow passage 334b is unable to circulate smoothly because of the resisting member 335 with which the flow passage 334b has been filled. Accordingly, a constant amount of water vapor is constantly retained inside the flow passage 334b. As a result, it is possible to prevent splashes caused by rippling and sudden boiling and to stabilize the water vapor outflow rate, and it is also possible to effectively suppress variations in the flow rate upstream of the mixer 337.

On the other hand, the water 318a serving as a heating medium that has condensed inside the liquefaction chamber 318e moves to the bottom portion of the liquefaction chamber 318e due to gravity, and then moves into the vaporization chamber 318c via the communicating pipe 318d connected to this bottom portion. As a result of this, the condensed water 318a is rapidly removed without remaining on the surface of the flow passages 334a and 334b and heat is constantly being given off by fresh water vapor. Moreover, the water is then heated once again and vaporized by the heater 318b and the processes described above are thereafter repeated. Namely, the water vapor, which has become a heat source, is continuously and stably supplied, and the fluid in the flow passages 334a and 334b are heated stably.

Accordingly, water vapor is supplied stably to the electric discharge pipe 305, the plasma can be stabilized without there being any loss of the plasma, and it is possible to obtain an improvement in the treatment performance.

Next, the electromagnetic valve 319b is opened and fleon gas is supplied to the electric discharge pipe 305.

At this time, oil elements and moisture in the fleon gas discharged from the recovered fleon cylinder 328 are removed when the gas passes through the mist separator 332.

As a result, the generation of byproducts and contamination of the pipes and the like caused by lubricating oil in the fleon gas is suppressed, and the efficient and stable supply of fleon gas and the like is made possible. Moreover, the supply of excess moisture can be prevented and there is no plasma loss.

Accordingly, the plasma can be stabilized and it is possible to obtain an improvement in the treatment performance.

The mixing of the water vapor, argon gas, and fleon gas that have passed through the fluid heating apparatus 318 and been fed into the mixer 337 is accelerated not only by the loss in pressure when they pass through the aperture 338a of an orifice 338, but is also accelerated when they strike the end surface 337A on the exit side. Therefore, they leave the mixer 337 in a more uniformly mixed state and are thus supplied to the electric discharge pipe 305.

As a result, there is sufficient decomposition reaction according to Formula 9 and it is possible to suppress the generation of byproducts such as chlorine gas and carbon monoxide.

When the microwaves are irradiated onto the fleon gas supplied thus to the electric discharge pipe 305, the level of electronic energy in the electric discharge pipe 305 is high and thermal plasma heated to a temperature of 2000K to 6000K is generated.

At this time, because argon gas is supplied to the electric discharge pipe 305 at the same time as the fleon gas and the water vapor, there is no plasma loss.

Because the distal end of the inner pipe 311 is placed exactly a predetermined distance towards the inner side than the distal end of the probe antenna 309a, it is possible to avoid the generated plasma being thermally affected and to prevent the inner pipe 311 from being damaged by melting.

As a result, there is no marked deformation of the state of the plasma and a stable decomposition reaction is made possible.

Moreover, because the fleon gas is placed in a state in which it can be easily separated into chlorine atoms, fluorine atoms, and hydrogen atoms by the thermal plasma generation, it is easily decomposed by reacting with the water vapor, as is shown in Formula 9.

When the plasma is stable the electromagnetic valve 319a is closed and the supply of argon gas is halted.

The gas generated by the decomposition reaction is discharged into the alkaline solution in the exhaust gas treatment tank 341 via the exchange coupling 344 and the intake pipe 345.

However, because these generated gases are at extremely high temperature, they are firstly cooled to a approximately 400°C by the cooler 346 provided at the reaction pipe 315 before they pass into the intake pipe 345.

At this temperature, because there is no recondensation of the water vapor remaining inside the reaction pipe 315, the reaction pipe 315 is held in a dry state and there is no plasma loss.

On the other hand, the cooling water of the cooler 346 that has been warmed to approximately 50°C by cooling the reaction pipe 315 is fed to the heater 347 provided in the recovered fleon cylinder 328 where it prevents mist from being generated in the cylinder 328 and the pipes downstream thereof when the liquid fleon gas inside the recovered fleon cylinder 328 is vaporized, thereby suppressing pressure variations due to temperature reductions.

The cooling water from which the heat has been taken by the above operation can be reused as cooling water in the cooler 346 enabling the amount of water consumed to be kept extremely low.

The generated gas that has been cooled by the cooler 346 undergoes further rapid cooling to less than approximately 100°C as it passes through an exchange coupling 344 from cooling water sprayed from a water spray nozzle 351.

As a result, it is possible to use the resin intake pipe 345 within its heat proof temperature range and it can be protected against heat damage caused by high temperatures.

At this time, because acidic liquid is created as the gas generated in the decomposition reaction of Formula 9 is dissolved in the cooling water, the exchange coupling 344 is gradually corroded and, in some cases, should be replaced depending on the extent of the corrosion.

Namely, because only the exchange coupling 344 needs to be replaced because of corrosion downstream from the reaction pipe 315, costs can be reduced and the task of replacement simplified.

The generated gas that is discharged through the intake pipe 345 into the alkaline solution is rendered harmless by the neutralization reaction in Formula 10 and discharged via the exhaust ducts 342.

Because this neutralization reaction is a heat generating reaction, the temperature of the alkaline solution is maintained at below 70°C by the cooler 353 so as to protect the intake pipe 345 from heat damage.

The generated gas that is discharged as bubbles from the distal end of the intake pipe 345 is divided into even smaller bubbles when it collides with the blades 352d of the bubble dividing means 352. Therefore, the surface area thereof that comes into contact with the alkaline solution is increased and the time taken until the gas reaches the solution of the surface is lengthened. Consequently, the neutralization reaction is accelerated.

As a result, there is no discharging of an amount of acidic gas exceeding a reference value to the outside of the system caused by the neutralization reaction being insufficient.

The neutral products created by the neutralization reaction remain in the alkaline solution as slurry, however, after the decomposition operation has been halted, this slurry is fed into the solid - liquid separator together 362 with the alkaline solution and the solids and liquid are continuously separated.

Because this separated solution is returned to the exhaust gas treatment tank 341 for reuse, in the decomposition apparatus, this coupled with the reuse of the cooling water enables the amount of water consumption to be greatly reduced.

Moreover, safety can also be increased by running the air compressor 324 after the decomposition operation has been halted in order to clean out any acidic gas still remaining in the apparatus.

Note that the decomposition apparatus for organic halogen compounds according to the present invention is not limited to the above embodiments and may include the embodiments described below.

(1) In the present embodiment, the direction of the slant of the flow passages 334a and 334b is the same as the direction of the slant of the bottom surface of the liquefaction chamber 318e, however, it is not limited to this and may be set in the reverse direction or the like. In this case, the water that has condensed around the flow passages 334a and 334b temporarily moves to the bottom surface of the liquefaction chamber 318e following the slant and then moves to the vaporization chamber 318c following the slant of the bottom surface.

Moreover, the orientation of the fluid flowing through the flow passages 334a and 334b may be either in a downwards direction or in an upwards direction relative to the slant of the flow passages.

Furthermore, it is not necessary for the flow passages 334a and 334b to be rectilinear, and they may, for example, be formed in a coil shape. In this case, the slant of the flow passages 334a and 334b is formed by a curved line that forms the twists of the coil.

Moreover, the number of flow passages is not limited to those described in the present embodiment.

(2) In the present embodiment, the slant of the bottom surface of the liquefaction chamber 318e is in one direction, however, it is also possible to connect the communicating pipe 318d to the center of the liquefaction chamber 318e and for the bottom surface of the liquefaction chamber 318e to be formed descending from both ends of the liquefaction chamber 318e towards the central communicating pipe 318d

Moreover, the liquefaction chamber 318e and the vaporization chamber 318c are formed in pipe shapes, however, the present embodiment is not limited to this and they may be formed in an optional shape.

Note that, as described above, it is not necessary for the vaporization chamber 318c to be placed on a slant and the existence or otherwise of a slant and the orientation of any slant is not something that is limited by the present embodiment.

(3) It is not necessary for there to be one communicating pipe 318d provided to connect the liquefaction chamber 318e and the vaporization chamber 318c and a plurality of communicating pipes may be provided. It is also possible to directly connect the liquefaction chamber 318e with the vaporization chamber 318c without providing the communicating pipe 318d between the two. It is also possible to form the liquefaction chamber 318e and the vaporization chamber 318c as a single body.

(4) Instead of the orifice 338 it is also possible to fill the mixer 337 with beads or the like as a means for accelerating the mixing inside the mixer 337.

In this structure, the mixing is accelerated because the fleon gas and the like and the water vapor circulate at random through the gaps formed in the mixer 337.

It is also possible to place a plurality of baffle plates at intervals on the inner peripheral surface of the mixer 337, for example, alternating in the vertical and horizontal directions (i.e. a static mixer).

In this structure, because the fleon gas and the like and the water vapor are circulated in a zigzag fashion, the mixing is accelerated.

It is also possible to place the piping that is connected to the entry side of the mixer 337 on an slant relative to the flow direction, and to provide a spirally extending guide plate at the inner peripheral surface of the mixer 337 (i.e. a swirl mixer).

In this structure, because the fleon gas and the like and the water vapor are circulated in a spiral fashion, the mixing is accelerated.

(5) Instead of pH control of the alkaline solution as a means for avoiding the discharge of acidic gas to the outside of the system caused by the neutralization reaction being insufficient, it is also possible to perform control using a motor current value.

Namely, if the number of motor revolutions decreases or stops, the bubbles being discharged from the intake pipe 345 are not being sufficiently divided and the neutralization reaction may not be being performed satisfactorily.

Therefore, if any abnormalities in the motor revolutions are detected based on the motor current value and the operation of the decomposition apparatus is halted by an instruction from the control device 361, it is possible to prevent the discharge of acidic gas to the outside of the system.

(6) Because the interior of the reaction pipe 315 is kept in a dry state, there is practically no corrosion effect caused by acidic gas generated by the decomposition reaction of Formula 9.

However, in order to improve the safety even more, it is also possible to install a simple booth enveloping the reaction pipe 315 and place an exhaust gas sensor for detecting $CO_2$ gas, CO gas and the like between the booth and the reaction pipe 315.

In this structure, the extent of corrosion of the reaction pipe 315 can be constantly monitored by the control device 361 via these exhaust gas sensors. Therefore, even if the reaction pipe 315 corrodes and gas generated by the decomposition reaction of Formula 9 escapes from the reaction pipe 315, the operation of the decomposition apparatus can be halted by an instruction from the control device 361 and the discharge of acidic gas to the outside of the system can be prevented by suctioning the escaped gas.

In this case, the gas suction can also be performed by the blower 343 provided in the exhaust duct 342.

(7) Because the slurry inside the exhaust gas treatment tank 341 precipitates to the bottom if it is left overnight after operations have been halted, it is also possible to pump out the precipitated high concentration slurry using a pump and to dispose of this using the solid - liquid separator.

In this case, because it is possible to pump out the high concentration slurry only without it being mixed in with free alkaline, highly efficient slurry treatment is possible.

Moreover, if a granulating agent or an agglomerating agent or the like is added to the alkaline solution so as to increase the granularity of the slurry, the precipitation time can be shortened, and even more efficient slurry treatment can be performed.

(8) Instead of placing the distal end of the Tesla coil 314 inside the electric discharge pipe 305, it is also possible to place it outside the electric discharge pipe 305 and to achieve ignition by spark discharge.

(9) Instead of changing the fleon to a gas state by heating the recovered fleon cylinder 328 and then allowing this fleon gas to flow out, it is also possible to invert the recovered fleon cylinder 328 and to allow the recovered fleon to flow out in a liquid state. After the quantity of the flow has been made constant using a restricting apparatus such as a differential pressure control valve or the like, the fleon may then be heat vaporized and fed to the fluid heating apparatus 318.

In this case, flow variations caused by temperature reductions can be suppressed by heating the restricting apparatus and the pipes.

(10) Instead of using the cooling water used to cool the reaction pipe 315 to heat the recovered fleon cylinder 328, it is possible to use the cooling water from the cooler 353 used for the slurry cooling in the exhaust gas treatment tank 341.

(11) The distance that the distal end of the inner pipe 311 is from the distal end of the probe antenna 309a towards the inside is optimally set to the same distance as the distal end of the probe antenna 309a is from the portion where the microwave energy converges, provided that the inner pipe 311 is not melted, however, it is also possible to alter this after considering the melting of the inner pipe 311.

(12) The bubble dividing means 352 may also be a screw type apparatus in which a propeller is fixed to the distal end of a shaft portion.

Further, each structural element 352b, 352c, and 352d of the bubble dividing means 352 may be made from a resin such as Teflon, and the bubble dividing means may be formed by joining these together using nuts and bolts.

In this structure, because not only are there no welded portions, but each structural element 352b, 352c, and 352d is formed from resin, this apparatus has extremely good corrosion resistance.

(13) Instead of placing the distal end portion of the intake pipe 345 at an inclined predetermined angle relative to the vertical direction, it may be formed substantially in a U shape.

(14) The neutral solution stored in the exhaust gas treatment tank 341 is not limited to the above alkaline suspension solution and it is also possible to use an aqueous alkaline solution such as a sodium hydroxide aqueous solution or the like.

(Possible Industrial Applications)

As is clear from the above description, according to the present invention, the effects described below are produced.

(a) In the decomposition apparatus for organic halogen compounds according to the first aspect of the present invention, even if the organic halogen compound to be decomposed is a refrigerant that has been recovered from air conditioners or the like, because it is possible to separate and remove oil elements mixed in with the refrigerant before the refrigerant is introduced into the plasma generating section, there is no contaminating of the piping system or generating of byproducts.

Accordingly, efficient and stable supply of organic halogen compounds becomes possible and the plasma can be stabilized continually for long periods of time, thereby enabling an improvement in the treatment performance to be achieved.

(b) In the decomposition apparatus for organic halogen compounds according to the second aspect of the present invention, even if variations in pressure are brought about by temperature reductions when the organic halogen compound is vaporized, it is possible to suppress variations in the volume flow rate of the organic halogen compound fed by the flow rate adjustment means to the downstream side thereof, and consequently, a stable supply to the plasma generating section becomes possible.

(c) In the decomposition apparatus for organic halogen compounds according to the third aspect of the present invention, the discharge pressure is kept constant by keeping the temperature of the saturated vapor constant. Moreover, in the decomposition apparatus for organic halogen compounds according to the sixth aspect of the present invention, because the organic halogen compounds that pass through the restricting apparatus are heated to and then kept at a fixed temperature by the heating apparatus, it is possible to effectively suppress variations in the volume flow rate of the organic halogen compound and, consequently, a stable supply to the plasma generating section becomes possible.

(d) In the decomposition apparatus for organic halogen compounds according to the fourth aspect of the present invention, variable control of the aperture cross sectional area of the restricting apparatus can be performed in accordance with the pressure upstream from the restricting apparatus. Moreover, in the decomposition apparatus for organic halogen compounds according to the fifth aspect of the present invention, because it is possible to keep the gas pressure upstream from the restricting apparatus constant using a pressure control valve, even if the gas pressure drops below a predetermined value as the time in operation becomes longer, it is possible to effectively suppress variations in the volume flow rate of the organic halogen compound and, consequently, a stable supply to the plasma generating section becomes possible.

(e) According to the decomposition apparatus for organic halogen compounds according to the seventh aspect of the present invention, the water inside the heater is uniformly heated and water vapor is generated with the water in contact with the heater for a sufficient length of time and a sufficient surface area of the water is in contact with the heater. Moreover, because a fixed amount of water vapor is always retained inside the heater, it is possible to prevent splashes caused by rippling and sudden boiling and to stabilize the water vapor outflow rate.

As a result, it is possible to stabilize the decomposition reaction without there being any plasma loss, and to achieve an improvement in the treatment performance.

(f) According to the decomposition apparatus for organic halogen compounds according to the eighth aspect of the present invention, deterioration of the filling member in a high temperature environment can be effectively prevented and the above effects can be continually maintained for long periods of time.

(g) According to the decomposition apparatus for organic halogen compounds according to the ninth aspect of the present invention, because the organic halogen compound is preheated before it is mixed with the water vapor, the water vapor is not recondensed by being cooled by the organic halogen compound. Moreover, because the preheating heater needed to prevent recondensation is formed integrally with the heater for generating the water vapor, it is possible to achieve effective use of the heat source and to conserve space.

(h) In the decomposition apparatus for organic halogen compounds according to the tenth aspect of the present invention, because the water vapor and organic halogen compounds inside the mixer are diffused by striking the resisting member and the flow directions of each are changed so that they collide with each other, the mixing together of the two is accelerated.

As a result, the decomposition reaction is sufficiently carried out and there is no generation of byproducts such as hydrogen chloride and carbon monoxide.

(i) In the decomposition apparatus for organic halogen compounds according to the eleventh aspect of the present invention, because the water vapor and the organic halogen compounds that have been fed into the mixer strike against the orifice and the two are made to collide against each other thereby accelerating the mixing upstream from the orifice, and because the mixing is also accelerated downstream from the orifice due to the turbulence that forms downstream from the orifice, it is possible to achieve even more improvement in the decomposition conditions.

(j) In the decomposition apparatus for organic halogen compounds according to the twelfth aspect of the present invention, because the water vapor and organic halogen compounds that have been fed into the mixer are circulated at random in the gaps between granular bodies and the two are made to collide together in the circulation process, the mixing is accelerated and it is possible to achieve an improvement in the decomposition conditions.

(k) In the decomposition apparatus for organic halogen compounds according to the thirteenth aspect of the present invention, because the water vapor and the organic halogen compounds that have been fed into the mixer are made to collide against baffle plates and to circulate in a zigzag manner inside the mixer, the mixing of the two is accelerated and it is possible to achieve an improvement in the decomposition conditions.

(l) In the decomposition apparatus for organic halogen compounds according to the fourteenth aspect of the present invention, because the water vapor and the organic halogen compounds that have been fed into the mixer via the nozzles are circulated while they form a swirl pattern (i.e. a whirlpool flow), the mixing of the two is accelerated and it is possible to achieve an improvement in the decomposition conditions.

(m) According to the fluid heating apparatus according to the fifteenth aspect of the present invention, the heating medium is vaporized by a heater and the fluid is heated by condensation heat transfer. As a result, the heating medium, which has become a heat source, can be stably and continually supplied, and the fluid can be stably heated and stably supplied.

(n) According to the fluid heating apparatus according to the sixteenth aspect of the present invention, because the heating medium that has been condensed in the liquefaction chamber is vaporized once again in the vaporization chamber, the heating medium, which has become a heat source, can be stably and continually supplied, and the fluid can be stably heated and stably supplied.

(o) According to the fluid heating apparatus according to the seventeenth aspect of the present invention, because the bottom surface of the liquefaction chamber is formed as a slope, the condensed heating medium moves rapidly to the vaporization chamber. As a result, the heating medium, which has become a heat source, can be stably and continually supplied, and the fluid can be stably heated and stably supplied.

(p) According to the fluid heating apparatus according to the eighteenth aspect of the present invention, because the flow passage is formed as a slope, the heating medium that has condensed on the surface of the pipe forming the flow passage can be removed rapidly. As a result, the heating medium, which has become a heat source, can be stably and continually supplied, and the fluid can be stably heated and stably supplied.

(q) According to the fluid heating apparatus according to the nineteenth aspect of the present invention, because a resisting member is provided in the flow passage, the variations in the flow rate that accompany the vaporization of the fluid in the flow passage can be suppressed and the fluid can be stably heated and stably supplied.

(r) According to the fluid heating apparatus according to the twentieth aspect of the present invention, by equipping the fluid heating apparatus with a pressure detector and a pressure control apparatus, it is possible to easily control the temperature of the heating medium and the fluid can be stably heated and stably supplied.

(s) According to the decomposition apparatus for organic halogen compounds according to the twenty-first aspect of the present invention, because the fluid is stably heated, an improvement in the treatment performance can be achieved without causing any plasma loss.

**Claims**

1. A decomposition apparatus for organic halogen compounds which generates thermal plasma by irradiating microwaves onto a gas containing organic halogen compounds and decomposes organic halogen compounds in the plasma, wherein a mist separator for separating and removing a mist of oil and moisture elements and the like mixed with the organic halogen compounds is provided on a transit path that leads from a cylinder containing organic halogen compound are contained to a plasma generating section.

2. A decomposition apparatus for organic halogen compounds which generates thermal plasma by irradiating microwaves onto a gas containing organic halogen compounds and decomposes organic halogen compounds in the plasma, wherein a flow rate adjustment means is provided for suppressing variations in a volume flow rate of organic halogen compounds circulating towards the plasma generating section.

3. The decomposition apparatus for organic halogen compounds according to claim 2, wherein the flow rate adjustment means is provided with a temperature adjustment apparatus for keeping constant a gas temperature inside a cylinder containing organic halogen compound.

4. The decomposition apparatus for organic halogen compounds according to claim 2, wherein the flow rate adjustment means is provided with a restricting apparatus whose aperture cross sectional area is controlled so as to be able to be varied in accordance with a gas pressure of organic halogen compounds upstream from the flow rate adjustment means.

5. The decomposition apparatus for organic halogen compounds according to claim 2, wherein the flow rate adjustment means is provided with a pressure control valve for keeping a gas pressure of an organic halogen compound upstream of the flow rate adjustment means at a constant pressure, and with a restricting apparatus provided downstream from the flow rate adjustment means.

6. The decomposition apparatus for organic halogen compounds according to claim 2, wherein the flow rate adjustment means is provided with a restricting means for vaporizing organic halogen compounds flowing out in a liquid state from a cylinder, and a heating apparatus for heating organic halogen compounds passing through the restricting means to fixed temperature and keeping the organic halogen compounds at the fixed temperature.

7. A decomposition apparatus for organic halogen compounds which generates thermal plasma by irradiating microwaves onto a gas containing organic halogen compounds and decomposes organic halogen compounds in the plasma by reacting the organic halogen compounds with water vapor, wherein the decomposition apparatus for organic halogen compounds is provided with a heater for generating water vapor by causing water supplied from a water source to pass through a flow passage provided in the heater body, and a filling member is provided in the flow passage so as to block the flow passage while leaving a gap running from the entry side to the exit side of the flow passage.

8. The decomposition apparatus for organic halogen compounds according to claim 7, wherein the filling member is formed from an inorganic material.

9. The decomposition apparatus for organic halogen compounds according to claim 7, wherein a second flow passage for circulating organic halogen compounds is formed in the beater separately from the flow passage.

10. A decomposition apparatus for organic halogen compounds which generates thermal plasma by irradiating microwaves onto a gas containing organic halogen compounds and decomposes organic halogen compounds in the plasma by reacting the organic halogen compounds with water vapor, wherein the decomposition apparatus for organic halogen compounds is provided with a mixer in a section where water vapor and organic halogen compound supplied by a separate system flow together, and a resisting member is provided inside the mixer section so as to partially block the circulation of the water vapor and the organic halogen compound.

11. The decomposition apparatus for organic halogen compounds according to claim 10, wherein an orifice provided inside the mixer is employed as the resisting member.

12. The decomposition apparatus for organic halogen compounds according to claim 10, wherein a granulated material with which the mixer is filled is employed as the resisting member.

13. The decomposition apparatus for organic halogen compounds according to claim 10, wherein baffle plates provided at alternating intervals on facing internal peripheral surfaces inside the mixer are employed as the resisting member.

14. A decomposition apparatus for organic halogen compounds which generates thermal plasma by irradiating microwaves onto a gas containing organic halogen compounds and decomposes organic halogen compounds in the plasma by reacting the organic halogen compounds with water vapor, wherein

the decomposition apparatus for organic halogen compounds is provided with a mixer in a section where water vapor and organic halogen compound supplied by a separate system flow together, and a plurality of inclined nozzles for separately introducing water vapor and organic halogen compounds arc provided at the mixer entry side, and these inclined nozzles are inclined at predetermined angles towards the exit side of the mixer relative to the outer peripheral tangential direction of the mixer.

15. A fluid heating apparatus including:

a sealed container;
a heating medium contained within the sealed container;
a heater for heating the heating medium; and
a fluid passage that penetrates through the sealed container and through which flows a fluid.

16. The fluid heating apparatus according to claim 15, wherein the sealed container is provided with a vaporization chamber that is provided with a heater, and with a liquefaction chamber, which is provided above the vaporization chamber and communicates with the vaporization chamber, through which the flow passage penetrates.

17. The fluid heating apparatus according to claim 16, wherein the liquefaction chamber has a sloping bottom surface and the liquefaction chamber and the vaporization chamber are connected together at the bottom end of the slope of the bottom surface.

18. The fluid heating apparatus according to claims 16 or 17, wherein the flow passage slopes in the longitudinal direction thereof.

19. The fluid heating apparatus according to any of claims 15 to 18, wherein a resisting member is provided inside the flow passage.

20. The fluid heating apparatus according to any of claims 15 to 19, wherein the fluid heating apparatus is provided with a pressure detector for detecting a pressure of the heating medium, and a pressure control apparatus for controlling an output of the heater based on an output from the pressure detector.

21. A decomposition apparatus for organic halogen compounds that is provided with a fluid heating apparatus for beating water, wherein the fluid heating apparatus includes:

a sealed container,
a heating medium contained within the sealed container;
a heater for heating the heating medium; and
a fluid passage that penetrates through the sealed container and through which flows a fluid.

EP 1 093 846 A1

# FIG. 1

FIG. 2

EP 1 093 846 A1

# FIG. 3

EXHAUST GAS

EP 1 093 846 A1

# FIG. 4

# FIG. 5A

FLEON GAS

# FIG. 5B

FLEON GAS

# FIG. 6

# FIG. 7

# FIG. 8

# FIG. 9

FIG. 10

FIG. 11

# FIG. 12

EXHAUST GAS

102  101  103  113  114  116  107  152a  115  141  121  131  162  124  132  126  119b  125  133  153  161  118  137

EP 1 093 846 A1

# FIG. 13

# FIG. 14

# FIG. 15

FIG. 16

FIG. 17

EP 1 093 846 A1

# FIG. 18

EXHAUST GAS

EP 1 093 846 A1

## FIG. 19

## FIG. 20

# FIG. 21

237

272  271

271

271  272

# FIG. 22

237

281  281

281

# FIG. 23A

237

WATER
VAPOR 291

291

FLEON GAS

# FIG. 23B

# FIG. 24

EP 1 093 846 A1

FIG. 25

EP 1 093 846 A1

FIG. 26

# FIG. 27

EXHAUST GAS

EP 1 093 846 A1

## FIG. 28

## FIG. 29

# FIG. 30

364

364b

334a

335

334b

364a

# INTERNATIONAL SEARCH REPORT

| International application No. |
| --- |
| PCT/JP00/02317 |

**A. CLASSIFICATION OF SUBJECT MATTER**
Int.Cl⁷　B01J19/08, B01D53/70

According to International Patent Classification (IPC) or to both national classification and IPC

**B. FIELDS SEARCHED**

Minimum documentation searched (classification system followed by classification symbols)
Int.Cl⁷　B01J19/00-19/32, B01D53/30-53/96, A62D3/00,
　　　　　B01D21/00-21/34, B01F1/00-5/26, F17C7/04,
　　　　　F22B1/28, F28D15/02, G05D7/01

Documentation searched other than minimum documentation to the extent that such documents are included in the fields searched
　　Jitsuyo Shinan Koho　　　　1926-1996　　Toroku Jitsuyo Shinan Koho　1994-2000
　　Kokai Jitsuyo Shinan Koho　1971-2000　　Jitsuyo Shinan Toroku Koho　1996-2000

Electronic data base consulted during the international search (name of data base and, where practicable, search terms used)
　　WPI (DIALOG)

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 3-295570, A (Nippon Steel Corporation), 26 December, 1991 (26.12.91), page 5, lower left column, line 10 to lower right column, line 11; Fig. 1　(Family: none) | 2-14 |
| Y | US, 5028452, A (Creative Systems Engineering, Inc.), 02 July, 1991 (02.07.91), Column 5, lines 42 to 44 & WO, 9104104, A　　& EP, 448660, A & JP, 4-502882, A　　& CN, 1057010, A & DE, 69032066, A | 2-14 |
| Y | Microfilm of the specification and drawings annexed to the request of Japanese Utility Model Application No.47965/1991 (Laid-open No.132300/1992) (Kyocera Corporation), 07 December, 1992 (07.12.92), Par. No. [0008]; Fig. 1　(Family: none) | 3 |
| Y | JP, 6-295209, A (Advance Denki Kogyo K.K.), 21 October, 1994 (21.10.94), Par. No. [0008]; Fig. 1　(Family: none) | 4 |

☒ Further documents are listed in the continuation of Box C.　☐ See patent family annex.

| * Special categories of cited documents: | "T" later document published after the international filing date or |
| --- | --- |

\*　Special categories of cited documents:
"A"　document defining the general state of the art which is not considered to be of particular relevance
"E"　earlier document but published on or after the international filing date
"L"　document which may throw doubts on priority claim(s) or which is cited to establish the publication date of another citation or other special reason (as specified)
"O"　document referring to an oral disclosure, use, exhibition or other means
"P"　document published prior to the international filing date but later than the priority date claimed

"T"　later document published after the international filing date or priority date and not in conflict with the application but cited to understand the principle or theory underlying the invention
"X"　document of particular relevance; the claimed invention cannot be considered novel or cannot be considered to involve an inventive step when the document is taken alone
"Y"　document of particular relevance; the claimed invention cannot be considered to involve an inventive step when the document is combined with one or more other such documents, such combination being obvious to a person skilled in the art
"&"　document member of the same patent family

| Date of the actual completion of the international search 04 July, 2000 (04.07.00) | Date of mailing of the international search report 18 July, 2000 (18.07.00) |
| --- | --- |
| Name and mailing address of the ISA/ 　　Japanese Patent Office | Authorized officer |
| Facsimile No. | Telephone No. |

Form PCT/ISA/210 (second sheet) (July 1992)

EP 1 093 846 A1

# INTERNATIONAL SEARCH REPORT

International application No.

PCT/JP00/02317

C (Continuation). DOCUMENTS CONSIDERED TO BE RELEVANT

| Category* | Citation of document, with indication, where appropriate, of the relevant passages | Relevant to claim No. |
|---|---|---|
| Y | Nippon Kikai Gakkai, "Kikai Kogaku Binran", 15 May, 1988 (15.05.88), *Nippon Kikai Gakkai*, p.B5-207 | 5 |
| Y | Microfilm of the specification and drawings annexed to the request of Japanese Utility Model Application No.140075/1979 (Laid-open No.59134/1981) (Mitsubishi Heavy Industries, Ltd.), 21 May, 1981 (21.05.81), Fig. 3 (Family: none) | 6 |
| Y | JP, 63-17302, A (SUMITOMO HEAVY INDUSTRIES, LTD.), 25 January, 1988 (25.01.88), Fig. 1 (Family: none) | 7,8 |
| Y | JP, 7-80287, A (Agency of Industrial Science and Technology), 28 March, 1995 (28.03.95), Fig. 1 (Family: none) | 9,21 |
| Y | JP, 4-16221, A (NIIGATA ENGINEERING CO., LTD.), 21 January, 1992 (21.01.92), page 3, upper left column, lines 4 to 8; Fig. 1 (Family: none) | 10,11 |
| Y | JP, 51-151860, A (Toray Industries, Inc.), 27 December, 1976 (27.12.76), page 1, lower left column, lines 12 to 15 (Family: none) | 12 |
| Y | JP, 2-184330, A (Mitsubishi Heavy Industries, Ltd.), 18 July, 1990 (18.07.90), Fig. 10 (Family: none) | 13 |
| Y | JP, 56-65618, A (Nkk Corporation), 03 June, 1981 (03.06.81), page 2, upper left column, line 20 to upper right column, line 9 (Family: none) | 14 |
| Y | Microfilm of the specification and drawings annexed to The request of Japanese Utility Model Application No.158201/1980 (Laid-open No.81359/1982), (Toshiba Corporation), 19 May, 1982 (19.05.82), Fig. 1 (Family: none) | 15-21 |
| Y | JP, 9-28773, A (TLV Ltd.), 04 February, 1997 (04.02.97), Fig. 1 (Family: none) | 15-21 |
| Y | JP, 6-185245, A (Mitsubishi Heavy Industries, Ltd.), 05 July, 1994 (05.07.94), Fig. 3 (Family: none) | 18 |
| Y | JP, 10-139402, A (Ishikawajima-Harima Heavy Industries Co., Ltd.), 26 May, 1998 (26.05.98), Par. No. [0008] (Family: none) | 19 |
| A | JP, 7-317535, A (Aisin AW Co., Ltd.), 05 December, 1995 (05.12.95), Par No.[0008] (Family: none) | 1 |

Form PCT/ISA/210 (continuation of second sheet) (July 1992)

64